# EUROPÄISCHE PATENTSCHRIFT

(11) **EP 0 568 911 B1**
(45) Veröffentlichungstag und Bekanntmachung des Hinweises auf die Patenterteilung: **11.12.1996**
(21) Anmeldenummer: 93106860.5
(22) Anmeldetag: 28.04.1993
(51) Int. Cl.: H04N 9/64, H04N 5/14

(54) **Anordnung zur Übertragung von Farbfernsehsignalen mit einem Leuchtdichtesignal und wenigstens einem diesem zugeordneten Farbsignal**
Device for transmitting colour television signals including a luminance signal and at least one of the associated colour signals
Dispositif de transmission de signaux de télévision couleur comprenant un signal de luminance et au moins un signal de couleur associé

(30) Priorität: 06.05.1992 DE 4215007
(43) Veröffentlichungstag der Anmeldung: 10.11.1993
(73) Patentinhaber: NOKIA TECHNOLOGY GmbH, 75175 Pforzheim (DE)
(72) Erfinder: Reime, Gerd, W-7542 Schömberg 4 (DE)

(56) Entgegenhaltungen:
- EP-A- 0 302 500
- EP-A- 0 340 648
- EP-A- 0 421 369
- DE-C- 3 541 103
- US-A- 4 758 891
- ELECTRONIC COMPONENTS & APPLICATION Bd. 10, Nr. 1 , 1991 Seiten 37 - 47 PETER KELTING 'TDA4670 Picture Signal Improvement (PSI) circuit'

## Beschreibung

Die Erfindung betrifft eine Anordnung zur Übertragung von Farbfernsehsignalen, die ein Leuchtdichtesignal und wenigstens ein diesem zugeordnetes Farbsignal enthalten gemäß dem im Oberbegriff des Anspruches 1 angegebenen Text.

EP-A-0 302 500 offenbart eine solche Anordnung.

Bei der Übertragung von Farbfernsehbildern wird im allgemeinen die Farbinformation eines Farbfernsehbildes getrennt von der Leuchtdichteinformation übertragen, insbesondere um die Kompatibilität zur Schwarz-Weiß-Übertragung eines derartigen Fernsehbildes zu wahren. Der Übertragung der Farbsignale für eine derartige Farbinformation steht hierbei eine wesentlich geringere Frequenzbandbreite zur Verfügung als der Übertragung der zugehörigen Leuchtdichtesignale. Hinzu kommt, daß bei der Übertragung der Farbfernsehbilder das Farbsignal den Übertragungsmodus häufiger wechselt als das zugehörige Leuchtdichtesignal. Dadurch ist das Farbsignal innerhalb einer Übertragung eines Farbfernsehbildes häufiger Störstellen innerhalb des Übertragungsweges ausgesetzt als das Leuchtdichtesignal. Diese Störstellen verflachen darüber hinaus insbesondere sprunghafte Änderungen der übertragenen Farbinformation im Übertragungsweg wegen der wesentlich geringeren Übertragungsbandbreite erheblich mehr als im Übertragungsweg des Leuchtdichtesignals die entsprechenden Leuchtdichtesprünge verflacht werden. Die Verflachung ursprünglich sprungartiger Farbübergänge mit einem großen Farbartunterschied verursachen insbesondere an einer senkrechten Farbkante des Originalbildes einen gestörten Farbübergang, der in der Gestalt eines verhältnismäßig breiten, störenden Farbsaumes auftritt und dessen Farbe zwischen der Farbart der beiden an der Sprungkante aneinandergrenzenden Farbflächen liegt. Außerdem ist dieser störende Farbsaum meistens einseitig neben der originalen Farbsprungkante angeordnet, so daß ein verzerrtes, oft deutlich neben den Leuchtdichtekonturen liegendes Farbbild wiedergegeben wird.

Aus der technischen Information TI 891023 der Firma Philips mit dem Titel "Die Schaltung TDA 4670 zur Bildsignal-Nachverarbeitung im Fernsehempfänger" ist eine Schaltung zur Beseitigung der eben beschriebenen Fehlfarben im Farbsaum einer senkrechten Farbkante bekannt, die in den Farbdifferenz-Übertragungskanälen eines Farbfernsehers differenzierende Flankendetektoren einer Flankendetektoranordnung enthält. Jeder Flankendetektor erzeugt an seinem Ausgang ein von der Art der detektierten Signalflanke abhängiges Detektorsignal, das in einem nachfolgendem Impulsformer der Anordnung nochmals differenziert und danach einem Schaltkreis mit einer eingestellten Schaltschwelle zugeführt wird. Die so erzeugten Schaltsignale der Flankendetektoranordnung steuern einen Analogschalter in der Übertragungsleitung, an dessen Ausgangsseite ein Speicherkondensator angeschlossen ist. Während der Dauer des Schaltsignales der Flankendetektoranordnung ist der Analogschalter unterbrochen, so daß während des unterbrochenen Zustandes des Analogschalters der Speicherkondensator den Pegel des ausgangsseitigen Übertragungskanals bestimmt und das Übertragungssignal so lange auf dem zuletzt vor dem Öffnen des Analogschalters anliegenden Pegel hält. Nach dem Wiederschließen des Analogschalters, d. h. nach dem Ende der Signalflanke verändert sich das Signal auf der ausgangsseitigen Übertragungsleitung mit der verhältnismäßig kurzen Ladezeit des Speicherkondensators auf den Pegel des Signalzustandes nach der Signalflanke, so daß die Steilheit der korrigierten Signalflanke nur noch von der kurzen Ladezeit des Speicherkondensators abhängig ist. Es hat sich jedoch gezeigt, daß in vielen Fällen, insbesondere wenn ein Videorekorder an den Fernseher angeschlossen ist, die störenden fehlfarbigen Farbsäume an senkrechten Farbkanten nicht beseitigt sind und weiterhin ein gestörtes flaues Farbbild auf dem Bildschirm des Fernsehers wiedergegeben wird.

In DE-A-41 32 508, veröffentlicht 01.04.93, ist eine Übertragungsanordnung zur Übertragung von Farbfernsehsignalen für die Wiedergabe eines Farbfernsehbildes auf einem Bildschirm vorgeschlagen, bei der sowohl im Übertragungsweg des Leuchtdichtesignals als auch im Übertragungsweg des zugehörigen Farbsignales der Farbfernsehsignale eine Verzögerungsleitung angeordnet ist. Der Übertragungsweg der Farbsignale enthält außerdem einen Signalumschalter, dessen Signalausgang in der einen Schaltstellung des Signalumschalters mit dem Ausgang der Verzögerungsleitung und in der anderen Schaltstellung des Signalumschalters mit dem Eingang der Verzögerungsleitung verbunden ist. Der Signalumschalter wird sowohl von einem das Farbsignal detektierenden Farbkantendetektor als auch von einem das Leuchtdichtesignal detektierendem Leuchtdichtesprungdetektor gesteuert. Ist kein Farbsprung oder Leuchtdichtesprung erkannt, wird das FBAS-Ausgangssignal aus dem verzögerten Farbsignal und dem verzögerten Leuchtdichtesignal gebildet. Während der Erkennung eines Farb- oder Leuchtdichtesprunges wird der Signalausgang des Signalumschalters während der Übertragung des verzögerten Farbsprunges auf den Eingang der Verzögerungsschaltung im Übertragungsweg des Farbsignales geschaltet, an dem bereits das neue Farbsignal hinter dem Farbsprung liegt.

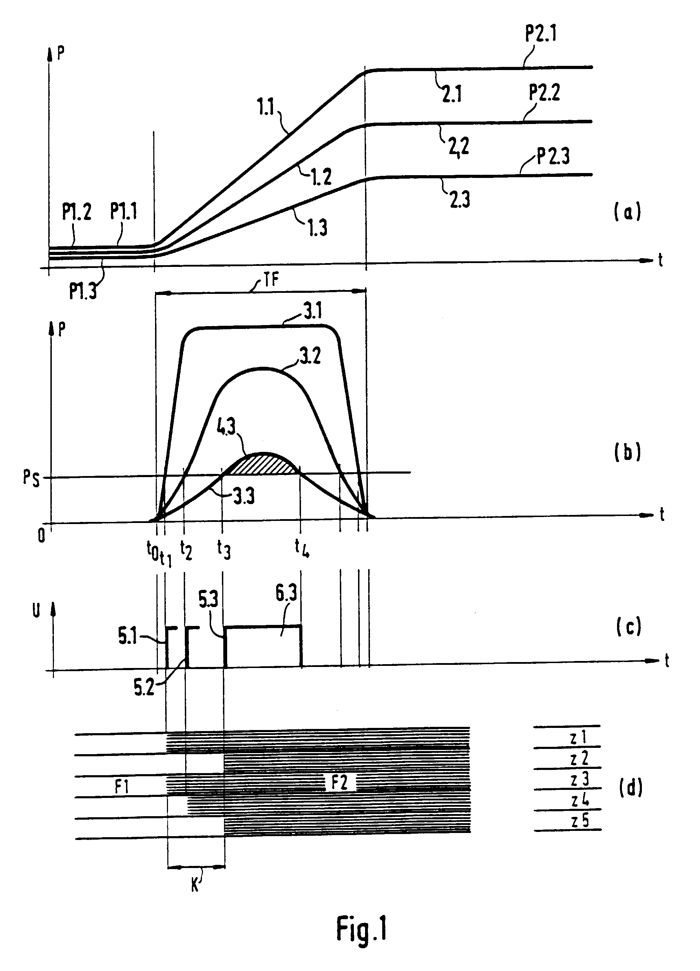

Der fehlfarbige Störstreifen an einer senkrechten Farbkante ist zwar durch die soeben beschriebenen Maßnahmen weitgehend beseitigt. Jedoch weist die Farbkante weiterhin einen störenden Jitter auf, der die Farbkante störend unruhig macht. Diese Störung ist besonders stark bei ziemlich verrauschten Farbfernsehsignalen oder wenn das Farbfernsehsignal von einer Farbart über eine verhältnismäßig flache Signalflanke in eine andere Farbart übergeht und die Steilheit der Signalflanke der dargestellten Farbkante von Zeile zu Zeile schwankt. Die Detektionssignale, die in den Verarbeitungsschaltungen der Flankendetektoren erzeugt werden, sind in ihrer Gestalt und ihrer Amplitude von der Beschaffenheit der detektierten Signalflanken abhängig, so daß sie an einer Schaltflanke bezüglich des Beginns der Schaltflanke sehr unterschiedliche Detektionszeitpunkte auslösen. Dies führt zu einer flimmernd bewegten Farbkante, die als störend empfunden wird. Dieser Vorgang ist schematisch in den Diagrammen (a) bis (d) der Figur 1 dargestellt. Im Diagramm (a) sind schematisch die Signalflanken 1.1, 1.2 und 1.3 dreier übertragener Farbsignale 2.1, 2.2 und 2.3 dargestellt, die jeweils innerhalb einer Flankendauer Tf von einem eine Farbe F1 darstellenden Pegel P1.1, P1.2 bzw. P1.3 auf einen eine Farbe F2 darstellenden Pegel P2.1, P2.2 bzw. P2.3 ansteigen. Im Diagramm (b) sind schematisch die drei zugehörigen glockenförmigen Detektionssignale 3.1, 3.2 und 3.3 eines nicht näher beschriebenen Flankendetektors dargestellt. Außerdem ist im Diagramm (b) der Bezugspegel Ps eingezeichnet, bei dem der diesen Bezugspegel überschreitende Teil eines Detektorsignals am Ausgang eines Schwellwertschalters dieser Detektoranordnung ein im Diagramm (c) dargestelltes Schaltsignal erzeugt. Im dargestellten Ausführungsbeispiel erzeugt der den Bezugspegel Ps überschreitende Teil 4.3 des Detektorsignals 3.3 das Schaltsignal 6.3. Da die drei Detektionssignale 3.1, 3.2 und 3.3 selbst sehr unterschiedliche Amplituden und Flankensteigungen aufweisen, durchlaufen sie zu sehr unterschiedlichen Seiten t1, t2 oder t3 den Bezugspegel Ps der Detektoranordnung, obwohl sie am gleichen Anfangszeitpunkt to beginnen. Diese letztgenannten unterschiedlichen Zeitpunkte legen jedoch die Schaltflanken 5.1, 5.2 und 5.3 für den Detektionszeitpunkt der detektierten Signalflanken fest. Im Diagramm (d) sind schematisch fünf Videozeilen z1 bis z5 eines Videobildes mit einer senkrechten Farbkante K zwischen den beiden Flächen mit der Farbe F1 links von der Farbkante und F2 rechts von der Farbkante K. Der durch die unterschiedlichen Schaltflanken 5.1, 5.2 und 5.3 hervorgerufenen Jitter, der sich dauernd ändert, ist im Diagramm (d) deutlich zu erkennen.

Der Erfindung liegt die Aufgabe zugrunde, eine im Oberbegriff angebene Anordnung zur Übertragung von Farbfernsehsignalen, die ein Leuchtdichtesignal und wenigstens ein diesem zugeordnetes Farbsignal enthalten, derart auszubilden, daß insbesondere an den senkrechten Farbkanten keine störenden, fehlfarbigen Farbsäume und kein störendes Farbkantenjitter auftritt. Diese Aufgabe wird nach der Erfindung durch die im kennzeichnenden Teil des Anspruches 1, dessen Text Bestandteil dieser Beschreibung ist, gelöst.

Mit den Mitteln der Erfindung werden einerseits in einfacher Weise an der zu detektierenden Flanke des verzögerten Signales zwei gleichgestaltete, versetzte, sich aber noch überlappende Differenzsignale erzeugt. Durch die Subtraktion der beiden sich überlappenden Detektionssignale in einer Subtrahieranordnung oder durch eine Addition der beiden sich überlappenden, zueinander invertierten Differenzsignale in einer Addieranordnung entsteht ein Flankendifferenzsignal, das definiert um eine Nullinie schwingt und im Bereich der Überlappung der beiden Einzelsignale in der Mitte des Flankendifferenzsignales einen Nulldurchgang an der steilsten Stelle des Signales enthält. Die Lage des Nulldurchganges ist weitgehend unabhängig von der Gestalt und der Amplitude der bei der Detektion entstehenden Einzelsignale.

Andererseits entsteht außerhalb einer Farbkante nicht, wie man erwarten könnte, durch die Überlagerung der verzögerten und der unverzögerten Farbsignale bei der Bildwiedergabe ein verflachtes Bild, sondern im Gegenteil, ein rauschärmeres Bild mit wesentlich weniger gestörten Farbflächen. An den Farbkanten sind die Bildstörungen durch geringere Umschaltstörungen des Signalschalters geringer, da durch die Mittenstellung des Signalschalters im Normalbetrieb der Abstand zu den beiden Signalzuständen vor und nach der Übergangsflanke wenigstens beim Schalten aus und in den Ruhezustand außerhalb der Farbkante geringer ist als beim Stand der Technik.

Die Unteransprüche kennzeichnen vorteilhafte Ausgestaltungen und Weiterbildungen der Erfindung. Der Text dieser Unteransprüche ist Bestandteil dieser Beschreibung.

In einer besonders vorteilhaften Ausgestaltung der Erfindung ist die Umschalteinrichtung des Signalumschalters ein elektronisches Überblendpotentiometer, das unmittelbar oder über einen Stellsignalverstärker von dem von der Flankendetektoranordnung erzeugten Flankendifferenzsignal gesteuert werden kann. Dadurch entfällt erstens eine Steuerung des Signalumschalters durch Schaltvorgänge, die stets mit Schaltstörungen auf dem Übertragungsweg der geschalteten Signale verbunden sind. Zum zweiten ist der Ausgleichvorgang zur Entstörung des fehlfarbigen Farbsaums leicht der Art des Überganges an der Signalflanke von einem Signalzustand zum anderen Signalzustand anpassbar, so daß bei kleineren Zustandsänderungen nur wenig in den Übertragungsablauf eingegriffen wird und damit dort auch geringere Störungen durch diesen Eingriff in den Übertragungablauf zu erwarten sind.

In einer weiteren vorteilhaften Ausgestaltung der Erfindung wird zusätzlich die Übertragung des Farbsignales auf erkennbare Farbsignalflanken detektiert. Damit wird erreicht, daß auch die störenden Farbsäume an Farbkanten, die nicht durch einen Leuchtdichtesprung gekennzeichnet sind, und störenden Jitter an diesen Farbkanten wesentlich reduziert werden, so daß sie nicht mehr ins Auge fallen. Hierbei kann es vorteilhaft sein, die Farbsaumentstörung durch die Farbkantendetektion nur dann wirksam zu schalten, wenn an der Stelle der Farbkante mit dem störende Farbsaum nicht zusätzlich eine Leuchtdichtekante erkannt wird. Eine andere vorteilhafte Maßnahme, das Ergebnis einer Farbkantendetektion in die Beseitigung eines störenden Farbsaumes an dieser Farbkante miteinzubeziehen, besteht darin, das Ausgangssignal der Farbkantendetektion zu einem bestimmten Anteil dem Ausgangssignal der Detektion der zugehörigen Leuchtdichtekante zu überlagern. Dadurch wird die Entstörung der Farbkante an die diese Störungen verursachenden Störgrößen angepaßt.

Die Erfindung wird nachfolgend anhand vorteilhafter Ausführungsbeispiele näher erläutert. Diese Ausführungsbeispiele zeigen nicht erschöpfend Beispiele vorteilhafter Ausgestaltungen und Weiterbildungen der Erfindung. Die Erfindung ist jedoch nicht auf die dargestellten Ausführungsbeispiele beschränkt. In den Zeichnungen zeigen
- Fig. 1: in Diagrammen (a) bis (d) unterschiedliche Signalflanken einer detektierten Farbkante und daraus abgeleitete Signale zur Entstörung der Farbkante gemäß dem Stand der Technik,
- Fig. 2: ein Blockschaltbild einer ersten Videosignal-Übertragungsanordnung mit einer Farbsaumentstörung,
- Fig. 3: die Diagramme (a) bis (nl) von Signalen zum Ablauf der Wirkungsweise der in Fig. 2 dargestellten Anordnung,
- Fig. 4: eine schematische Darstellung unterschiedlicher Detektionssignale einer Anordnung gemäß der Erfindung mit einem Nulldurchgang an der Detektionsstelle und einen Ausschnitt einer daraus gebildeten Farbkante,
- Fig. 5: ein Blockschaltbild eines zweiten Ausführungsbeispieles der Erfindung mit einer Detektion sowohl der Farbkante als auch der zugehörigen Leuchtdichtekante,
- Fig. 6: Diagramme (a) bis (n) von Signalen zum Ablauf der Wirkungsweise der in Fig. 5 dargestellten Anordnung,
- Fig. 7: ein Blockschaltbild eines dritten Ausführungsbeispieles einer Anordnung gemäß der Erfindung mit zwei detektierten Übertragungswegen für zwei getrennte Farbsignale des Videosignals und mit einem elektronischen Überblendpotentiometer in den Signalumschaltern,
- Fig. 8: Diagramme (a) bis (n) von Signalen zum Ablauf der Wirkungsweise der in Fig. 7 dargestellten Übertragungsanordnung.

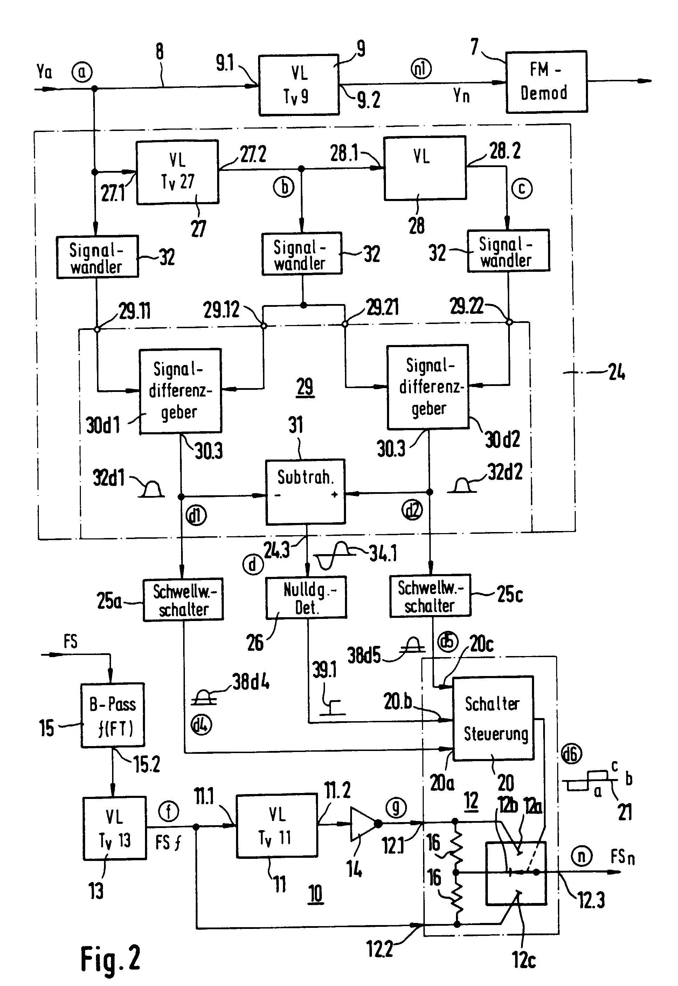

Figur 2 zeigt in einem Blockschaltbild ein Ausführungsbeispiel einer Anordnung zur Übertragung von Farbfernsehsignalen zur Wiedergabe eines Farbfernsehbildes auf einem nicht näher dargestellten Bildschirm. Im dargestellten Ausführungsbeispiel ist die Übertragungsanordnung beispielsweise vor dem Frequenzdemodulator 7 im Wiedergabeteil eines nicht näher dargestellten Videorecorders angeordnet. Zur Übertragung eines Farbfernsehsignales enthält die Übertragungsanordnung einen Übertragungsweg 8 mit einer Verzögerungsleitung 9 zur Übertragung des frequenzmodulierten Leuchtdichtesignales Ya des Farbfernsehsignales und einen Übertragungsweg 10 mit einer Verzögerungsleitung 11, einem Signalumschalter 12 und einer zusätzlichen Verzögerungsleitung 13 zur Übertragung des Farbsignales FSf des Farbfernsehsignales. Der Übertragungsweg 10 für das Farbsignal ist an den Ausgang 15.2 eines Bandpasses 15, der auf die Farbträgerfrequenz f(FT) abgestimmt ist, angeschlossen. Der Signalumschalter 12 enthält drei Schaltstellungen 12a, 12b und 12c, von denen die mittlere Schaltstellung 12b über zwei gleiche ohmsche Widerstände 16 mit den beiden äußeren Schaltstellungen 12a und 12c verbunden ist.

Der mit der äußeren Schaltstellung 12a verbundene erste Signaleingang 12.1 des Signalumschalters 12 ist an den Ausgang 11.2 der Verzögerungsleitung 11 im Übertragungsweg 10 des Farbsignales angeschlossen und der mit der zweiten äußeren Schaltstellung 12c des Signalumschalters verbundene zweite Signaleingang 12.2 ist an den Eingang 11.1 dieser Verzögerungsleitung 11 angeschlossen. Außerdem enthält der Signalumschalter 12 eine Schaltersteuerung 20, die ein Stellsignal 21 zur Einstellung des Signalumschalters auf die Schaltstellung 12a, 12b oder 12c erzeugt.

Zwischen dem Eingang 9.1 der Verzögerungsleitung 9 im Übertragungsweg 8 und den Stelleingängen 20a bis 20c der Schaltersteuerung 20 ist eine Flankendetektoranordnung 24 sowie zwei Schwellwertschalter 25a und 25c und ein Nulldurchgangsdetektor 26 geschaltet. Die Flankendetektoranordnung 24 besteht im wesentlichen aus der Serienschaltung zweier Verzögerungsleitungen 27 und 28, von denen der Eingang 27.1 der ersten Verzögerungsleitung 27 der Serienschaltung an den Eingang 9.1 der Verzögerungsleitung 9 im Übertragungsweg 8 angeschlossen ist, und einer Signalverarbeitungsschaltung 29 mit zwei Signaldifferenzgebern 30dl und 30d2 und einem Subtrahierer 31. Die Differenzeingänge des ersten Signaldifferenzgebers 30dl bilden das erste Differenzeingangspaar 29.11 und 29.12 der Signalverarbeitungsschaltung 29 und die Differenzeingänge des zweiten Signaldifferenzgebers 30d2 bilden das zweite Differenzeingangspaar 29.21 und 29.22 der Signalverarbeitungsschaltung. Diese Differenzeingänge sind über Signalwandler 32 an die Eingänge 27.1 und 28.1 und die Ausgänge 27.2 und 28.2 der beiden in Serie geschalteten Verzögerungsleitungen 27 und 28 der Flankendetektoranordnung 24 angeschlossen, derart, daß der erste Signaldifferenzgeber 30dl längs der ersten Verzögerungsleitung 27 und der zweite Signaldifferenzgeber 30d2 längs der zweiten Verzögerungsleitung 28 angeordnet ist. Die Signalwandler 32 dienen dazu, die an den Ein- und Ausgängen der Verzögerungsleitungen 27 und 28 anliegenden Signale Ya, Yb, Yc in äquivalente Ausgangssignale umzuwandeln, die so beschaffen sind, daß die Signaldifferenzgeber 30d1 und 30d2 aus den Signalwerten der äquivalenten Ausgangssignale je einen der Differenz der Signale Ya, Yb, bzw, Yb, Yc entsprechenden Differenzwert bilden und je ein diesem Differenzwert entsprechendes Differenzsignal 32dl und 32d2 an ihrem Signalausgang 30.3 erzeugen.

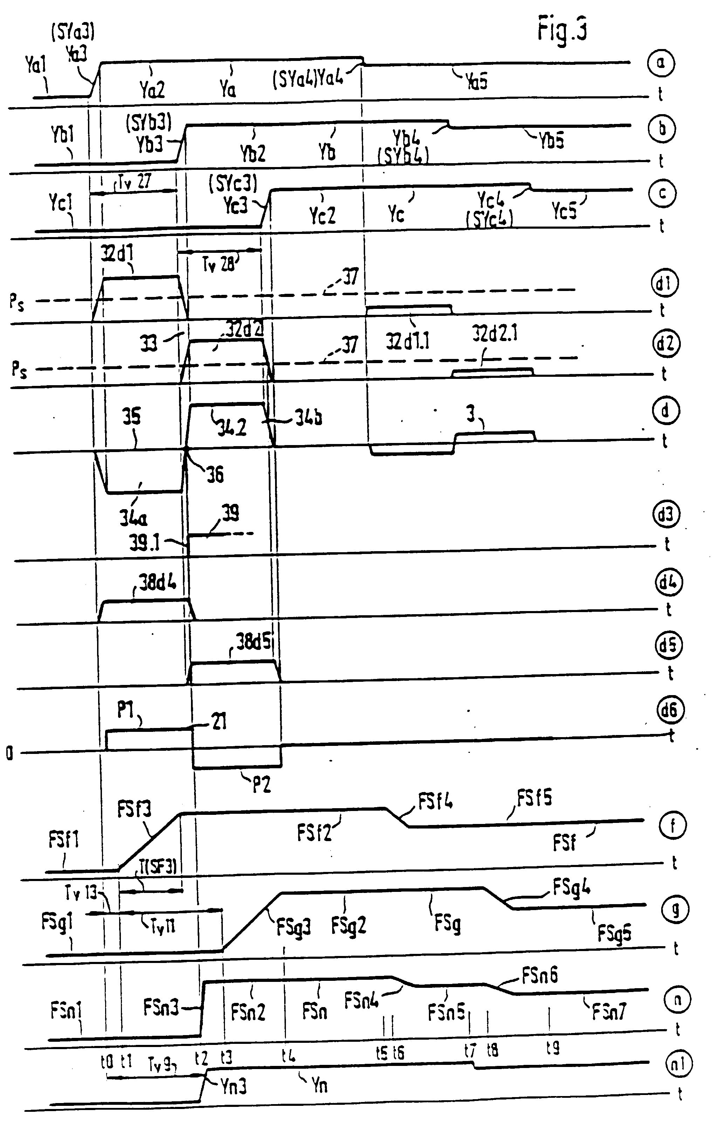

Die Wirkungsweise der Farbsaumentstörung der in der Figur 2 beispielsweise dargestellten Übertragungsanordnung wird anhand der Diagramme der Figur 3 näher erläutert. Die Bezeichnung (a) bis (nl) der Diagramme in Figur 3 ist so gewählt, daß sie mit den Diagrammbezeichnungen der entsprechenden Diagramme der nachfolgenden Ausführungsbeispiele der Erfindung übereinstimmt.

Die Verzögerungszeit Tvll der Verzögerungsleitung 11 im Übertragungsweg 10 des Farbsignales FSf ist im dargestellten Ausführungsbeispiel so bemessen, daß sie exakt ein ungeradzahliges ganzes Vielfaches der halben Schwingungszeit T(FT) des Farbträgers abzüglich der Laufzeit des im dargestellten Ausführungsbeispiel dieser Verzögerungsleitung 11 nachgeschalteten Inverters 14 und nur wenig größer als die größte zu erwartende Flankendauer T(SF) der den störenden Farbsaum verursachenden Signalflanken des Farbsignales ist. Unter Flankendauer wird die Dauer des Zeitbereiches einer Signalflanke verstanden, der den visuell sichtbaren störenden Farbsaum verursacht. Mit dieser Maßnahme wird erreicht, daß beim Umschalten des Signalumschalters 12 keine Phasenfehler entstehen und in der mittleren Schaltstellung 12b des Signalumschalters dem Ausgang 12.3 des Signalumschalters 12 das unverzögerte Farbsignal FSf und das verzögerte Farbsignal FSg gleichphasig zugeführt wird und damit Phasenfehler bei der Übertragung des Farbsignales vermieden werden.

Das Diagramm (a) zeigt schematisch einen Ausschnitt aus dem unverzögerten frequenzmodulierten Leutchtdichtesignal Ya am Eingang 9.1 der Verzögerungsleitung 9 im Übertragungsweg 8 dieses Signales und am Eingang 27.1 der ersten Verzögerungsleitung 27 der Flankendetektoranordnung 24, das Diagramm (b) das durch diese Verzögerungsleitung einfach verzögerte Leuchtdichtesignal Yb am Ausgang 27.2 dieser Verzögerungsleitung und das Diagramm (c) das durch die zweite Verzögerungsleitung 28 der Flankendetektoranordnung 24 nochmals verzögerte Leuchtdichtesignal Yc. Das unverzögerte Leuchtdichtesignal Ya enthält zum Zeitpunkt t0 einen Leuchtdichtesprung SYa3, an dem das Leuchtdichtesignal in einer steil ansteigenden Signalflanke Ya3 von einem einen ersten Leuchtdichtewert darstellenden ersten Signalzustand Ya1 in einen einen zweiten Leuchtdichtewert darstellenden zweiten Signalzustand Ya2 springt, und zum Zeitpunkt t5 einen zweiten kleineren Leuchtdichtesprung SYa4, an dem das Leuchtdichtesignal Ya über eine zweite Signalflanke Ya4 von dem zweiten Signalzustand Ya2 in einen einen dritten Leuchtdichtewert darstellenden dritten Signalzustand Ya5 übergeht. Entsprechend ist das einfach verzögerte Leuchtdichtesignal Yb an den Stellen t1 und t7 und das nochmals verzögerte Leuchtdichtesignal Yc zu den Zeitpunkten t4 und t9 beschaffen. Der erste Signaldifferenzgeber 30dl bildet aus de Differenz des unverzögerten Leuchtdichtesignales Ya vom Ausgang des ersten Signalwandlers 32 und des verzögerten Leuchtdichtesignales Yb vom Ausgang des zweiten Signalwandlers 32 zwischen dem Leuchtdichtesprung SYa3 und dem Leuchtdichtesprung SYb3 des einfach verzögerten Leuchtdichtesignales Yb an seinem Ausgang 30.3 ein differenzsignal 32d1, das das Abbild der Signaldifferenz zwischen dem Signal Ya am Eingang 27.1 und dem einfach verzögerten Leuchtdichtesignal Yb am Ausgang 27.2 der ersten Verzögerungsleitung 27 der Flankendetektoranordnung 24 ist. In gleicher Weise bildet der zweite Signaldifferenzgeber 28 zwischen dem Leuchtdichtesprung SYb3 des einfach verzögerten Leuchtdichtesignales Yb vom Ausgang des zweiten Signalwandlers 32 und dem Leuchtdichtesprung SYc3 des nochmals verzögerten Leuchtidchtesignales Yc am Ausgang des dritten Signalwandlers 32 der Flankendetektoranordnung 24 ein zweites Differenzsignal 32d2 an seinem Ausgang 30.3. Die beiden durch die Signaldifferenzgeber 30dl und 30d2 erzeugten Signaldifferenzsignale 32d1 und 32d2 sind in den Diagrammen (d1) und (d2) der Figur 3 dargestellt, ebenso wie die beiden zwischen den Leuchtdichtesprüngen SYa4 und SYb4 des unverzögerten und des einfach verzögerten Leuchtdichtesignals einerseits und den Leuchtdichtesprüngen SYb4 und SYc4 des einfach verzögerten und des doppelt verzögerten Leuchtdichtesignales andererseits gebildeten Signaldifferenzsignales 32d1.1 und 32d2.1. Die Signaldifferenzgeber 30d1 und 30d2 sind so beschaffen, daß sie die von ihnen gebildeten Signaldifferenzsignale an ihrem Signalausgang 30.3 nur in einer Polungsrichtung ausgeben, im dargestellten Ausführungsbeispiel nur in elektrisch positiver Polungsrichtung. Durch die Art der Erzeugung der beiden Signaldifferenzsignale 32d1 und 32d2 überlappen sich diese beiden Signale zeitlich im Bereich 33 der Flankenanstiegszeit T(FSL3). Der Subtrahierer 31 subtrahiert die beiden sich gleichenden Signale, so daß an seinem Signalausgang, der den Detektionsausgang 24.3 der in Figur 2 dargestellten Flankendetektionsanordnung 24 darstellt, ein Flankendifferenzsignal 34.1 und im Bereich des zweiten Leuchtdichtesprunges SYb4 des verzögerten Leuchtdichtesignales Yb ein zweiten Flankendifferenzsignal 34.2 entsteht, die beide im Diagramm (d) der Figur 3 dargestellt sind. Beide Flankendifferenzsignale 34.1 und 34.2 schwingen mit einer im dargestellten Ausführungsbeispiel negativ gerichteten ersten Schwingung 34a und mit einer darauf folgenden im dargestellten Ausführungsbeispiel positiv gerichteten zweiten Schwingung 34b um eine Nullinie 35 und durchlaufen die Nullinie in der Mitte t2 des Überlappungsbereiches 33 der beiden Signaldifferenzsignale 32d1 und 32d2 mit einem Nulldurchgang 36. Dieser Nulldurchgang liegt einerseits an der steilsten Stelle des Flankendifferenzsignales 34.1 und andererseits zeitlich in der Mitte der Signalflanke des Leuchtdichtesprunges SYb3 des einfach verzögerten Leuchtdichtesignales Yb und definiert so den Detektionszeitpunkt t2 des Leuchtdichtesprunges SYb3 des verzögerten Leuchtdichtesignales am Ausgang 27.2 der ersten Verzögerungsleitung 27 der Flankendetektionsanordnung 24.

In dem in Figur 2 dargestellten Ausführungsbeispiel ist an den Signalausgang 30.3 der Signaldifferenzgeber 30dl und 30d2 jeweils ein Schwellwertschalter 25a bzw. 25c angeschlossen, deren Schaltpegel Ps in den Diagrammen (dl) und (d2) der Figur 3 durch eine gestrichelte Linie 37 dargestellt ist. Überschreitet der Pegel der Signaldifferenzsignale 32dl und 32d2 den durch die Linie 37 dargestellten Schaltpegel Ps der Schwellwertschalter, erzeugen diese während der Zeit des Überschreitens an ihrem Ausgang 25.1 ein Schaltsignal 38d4 und 38d5, das in den Diagrammen (d4) und (d5) der Figur 3 schematisch dargestellt ist. Der Nulldurchgangsdetektor 26 am Ausgang des Subtrahierers 31 erzeugt im Nulldurchgang 36 des ihm zugeführten Flankendifferenzsignales 34.1 eine Schaltflanke 39.1 eines Schaltsignales 39, das zusammen mit der Schaltflanke 39.1 schematisch im Diagramm (d3) der Figur 3 dargestellt ist. Aus diesen drei Schaltsignale 38d4, 38d5 und 39 erzeugt die Schaltersteuerung 20 des Signalumschalters 12 ein Stellsignal 21, das im Diagramm (d6) der Figur 3 dargestellt ist und das im dargestellten Ausführungsbeispiel während des Schaltsignales 38d4 des ersten Signaldifferenzgebers 30dl einen ersten Stellpegel P1 und während des Schaltsignales 38d5 des zweiten Signaldifferenzgebers 30d2 einen zweiten Stellpegel P2 aufweist und an der Schaltflanke 39.1 des Schaltsignales 39 des Nulldurchgangsdetektors 26 von dem ersten Stellpegel P1 auf den zweiten Stellpegel P2 springt und außerhalb dieser beiden Schaltsignale 38d4 und 38d5 den Stellpegel 0 aufweist, bei dem der Signalumschalter in die mittlere Schaltstellung 12b eingestellt ist. Der erste Stellpegel P1 stellt den Signalumschalter 12 in die erste äußere Schaltstellung 12a, in der der Ausgang 12.3 des Signalumschalters mit dem Ausgang der Verzögerungsleitung 11 des Übertragungsweges 10 für das Farbsignal verbunden ist. Der zweite Stellpegel P2 stellt den Signalumschalter 12 in die zweite Schaltstellung 12c, in der der Ausgang 12.3 des Signalumschalters mit dem Eingang dieser Verzögerungsleitung 11 verbunden ist.

Der Leuchtdichtesprung SYa4 zwischen dem Signalzustand Ya2 und Ya5 des unverzögerten Leuchtdichtesignales Ya und der verzögerten Leuchtdichtesignale Yb und Yc ist derart gering, daß der Pegel der daraus in der Flankendetektoranordnung 24 erzeugten Signaldifferenzsignale 32d1.1 und 32d2.1 den Schaltpegel Ps der Schwellwertschalter 25a und 25c nicht erreichen und dadurch am Ausgang der Schwellwertschalter 25a und 25c keine Schaltsignale erzeugt werden. Dadurch kommt auch das am Ausgang des Subtrahierers 31 aus den Signaldifferenzsignalen 32d1.1 und 32d2.1 erzeugte Flankendifferenzsignal 34.2 in der Schaltersteuerung 20 des Signalumschalters 12 nicht zur Wirkung.

Im Diagramm (f) der Figur 3 ist ein Ausschnitt des unverzögerten, dem unverzögerten Leuchtdichtesignal Ya zugeordneten Farbsignales FSf dargestellt, das am zweiten Signaleingang 12.2 des Signalumschalters 12 anliegt, während im Diagramm (g) das durch die Verzögerungsleitung 11 verzögerte und am ersten Signaleingang 12.1 des Signalumschalters 12 anliegende Farbsignal FSg ausschnittsweise dargestellt ist. Das unverzögerte Farbsignal FSf weist eine erste Signalflanke FSf3 auf, in der das Farbsignal in einer Flankenanstiegszeit T(SF3) von einem eine erste Farbart F1 darstellenden Signalzustand FSf1 in einen eine zweite Farbart F2 darstellenden Signalzustand FSf2 übergeht und die der ersten Signalflanke Ya3 des im Diagramm (a) dargestellten Leuchtdichtesignales Ya zugeordnet ist, und eine zweite Signalflanke FSf4, an der das Farbsignal FSf vom Signalzustand FSf2 in einen die Farbart F3 darstellenden Signalzustand FSf5 übergeht und die zur Signalflanke Ya4 des Leuchtdichtesignales Ya an der Stelle t6 gehört. Entsprechend ausgestaltet ist der im Diagramm (g) dargestellte, um die Verzögerungszeit Tv11 gegenüber dem unverzögerten Farbsignal FSf versetzte Kurvenzug des verzögerten Farbsignales FSg. Die Anstiegszeit T(SF3) der Signalflanke FSf3 ist um ein wesentliches Vielfaches größer als die Anstiegszeit T(SFL3) der zugehörigen Signalflanke Ya3 des unverzögerten Leuchtdichtesignales Ya. Diese einen größeren Farbartbereich überstreichenden Signalflanken aufeinanderfolgender Zeilen eines durch das Farbfernsehsignal übertragenen Farbbildes erzeugen einen störenden Farbsaum entlang einer im Farbbild dargestellten Farbkante.

Im allgemeinen ist die Signalflanke Ya3 des unverzögerten Leuchtdichtesignales Ya bezüglich der zugehörigen Signalflanke FSf3 des unverzögerten Farbsignales FSf zeitlich so eingestellt, daß die Mitte der Signalflanke des Leuchtdichtesignales zeitlich auf der Mitte der zugehörigen Signalflanke des unverzögerten Farbsignales liegt. Die Verzögerungszeit Tv13 der Verzögerungsleitung 13 am Ausgang 15.2 des Bandpasses 15 ist so bemessen, daß die Signalflanke FSf3 des unverzögerten Farbsignales FSf zeitlich soweit verzögert wird, daß das Ende der größten zu erwartenden Anstiegszeit T(SF3) unmittelbar vor dem Nulldurchgang 36 zum Zeitpunkt t2 des von der Flankendetektionsanordnung 24 erzeugten Flankendifferenzsignales 34.1. Andererseits ist die Verzögerungszeit Tv27 der ersten Verzögerungsleitung 27 der Flankendetektionsanordnung 24 größer als die zu erwartende größte Anstiegszeit T(SF3) einer Farbkante des Farbsignales FSf, so daß die vor dem Nulldurchgang 36 liegende Schwingung 34a zeitlich immer breiter ist als der störende Farbsaum.

Diagramm (n) stellt schematisch den Kurvenzug des übertragenen Farbsignales FSn am Signalausgang 12.3 des Signalumschalters 12 dar. Dadurch, daß der Signalumschalter durch das Schaltsignal 21 vor Beginn der Signalflanke FSf3 des unverzögerten Farbsignales FSf in seine erste äußere Schaltstellung 12a eingestellt wird, ist der Signalausgang 12.3 des Signalumschalters 12 mit dem Ausgang der Verzögerungsleitung 11 im Übertragungsweg des Farbsignales verbunden und überträgt solange den die erste Farbart F1 darstellenden ersten Signalzustand FSg1 des verzögerten Farbsignales FSg, bis zum Zeitpunkt t2 des Nulldurchganges 36 des Flankendifferenzsignales 34.1 am Ausgang 24.3 der Flankendetektionsanordnung 24 der Stellpegel des Stellsignales 21 der Schaltersteuerung 20 vom Pegelwert P1 auf den zweiten Pegelwert P2 wechselt und damit den Signalumschalter 12 in die zweite äußere Schaltstellung 12c umschaltet. Dadurch wechselt mit der Umschaltgeschwindigkeit des Signalumschalters 12 der Zustand des am Signalausgang 12.3 des Signalumschalters übertragenen Farbsignales FSn vom ersten, die erste Farbart F1 darstellenden Signalzustand FSn1 in den zweiten, die zweite Farbart F2 darstellenden Signalzustand FSn2 mit einer sehr steilen Signalflanke FSn3. Am Ende des Stellsignales 21 wird der Signalumschalter 12 wieder in seine mittlere Schaltstellung 12b zurückgestellt, in der er bis zu einem nächsten Stellsignal verharrt. Da in dieser mittleren Schaltstellung des Signalumschalters 12 sowohl das unverzögerte Farbsignal FSf als auch das verzögerte Farbsignal FSg die gleiche Einwirkung auf das Farbsignal FSn am Ausgang 12.3 des Signalumschalters 12 haben, tritt bei dem Farbsignal FSn am Signalausgang des Signalumschalters in abgeschwächter Form sowohl im Bereich der zweiten Signalflanke FSn4 des unverzögerten Farbsignals FSf als auch im Zeitbereich der zweiten Signalflanke FSg4 des verzögerten Farbsignales FSg eine Signalflanke auf. Die Farbänderungen an diesen beiden Farbkanten FSn4 und FSn6 sind jedoch im allgemeinen so gering, daß sie nicht ins Auge fallen. Die störende, einen Farbsaum erzeugende Signalflanke FSf3 des Farbsignales wird jedoch durch die Umschaltung der Übertragung am Signalumschalter 12 derart versteilert, daß sie auf dem wiedergegebenen Farbbild eine scharfe Farbkante ohne Farbsaum bildet.

Die Verzögerungszeit Tv9 der Verzögerungsleitung 9 im Übertragungsweg 8 des Leuchtdichtesignales Yn ist so bemessen, daß die zugehörige Leuchtdichtekante Yn3 zeitlich an der Stelle der versteilerten Farbkante FSn3 liegt, wie im Diagramm (n1) der Figur 3 schematisch dargestellt ist.

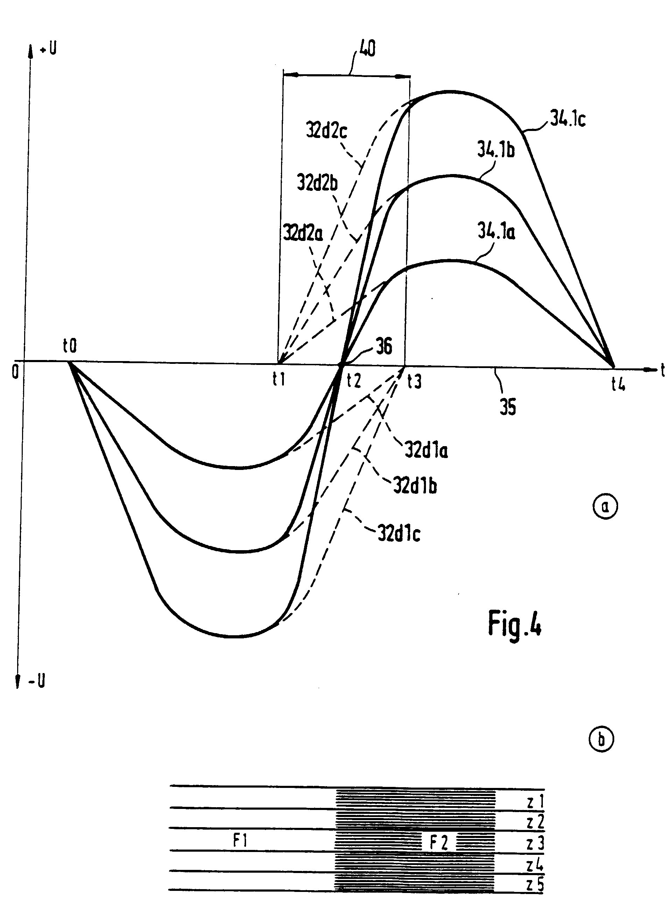

Die Umschaltung des Signalumschalters 12 von der ersten äußeren Schaltstellung 12a in die zweite äußere Schaltstellung 12c und damit der Farbsprung des Farbsignales am Signalausgang 12.3 des Signalumschalters 12 vom Signalzustand FSnl zum Signalzustand FSn2 erfolgt stets zum Zeitpunkt t2 des Nulldurchganges 36 des zugehörigen Flankendifferenzsignales 34.1 am Ausgang 24.3 der Flankendetektoranordnung 24. Dieser Nulldurchgang ist unabhängig von der Gestalt der an den Signaldifferenzgebern gebildeten Signaldifferenzsignale 32d1 und 32d2, wie schematisch im Diagramm (a) der Figur 4 dargestellt ist. Dort sind drei unterschiedliche Differenzsignalpaare 32d1a bis 32d2c und die daraus im Subtrahierer 31 gebildeten Flankendifferenzsignale 34.la bis 34.lc dargestellt. Dadurch, daß die Leuchtdichteflanken Ya3 der Leuchtdichtesignale Ya in den einzelnen Zeilen den Farbfernsehbildes an der gleichen Stelle liegen und die beiden Signaldifferenzsignale z. B. 32d1a und 32d2a eines Differenzsignalpaares die gleiche Amplitude und Kurvenform aufweisen, liegt die Mitte des Überlappungsbereiches 40 eines Differenzsignalpaares immer am gleichen Zeitpunkt t2 einer Bildzeile und liegt der Nulldurchgang 36 jedes aus den Differenzsignalpaaren gebildeten Flankendifferenzsignales 34.1a bis 34.1c ebenfalls in der Mitte des Überlappungsbereiches 40 und somit unabhängig von Gestalt und Amplitude der Flankendifferenzsignale einer Farbkante an der gleichen zeitlichen Stelle t2. Daraus ist erkennbar, daß der Detektionszeitpunkt der Signalflanken einer einer Farbkante zugeordneten Leuchtdichteflanke unabhängig von der Gestalt und der Amplitude der dazu detektierten Signaldifferenzsignale ist und der dadurch gesteuerte Umschaltzeitpunkt für die Farbsignale durch den Signalumschalter im Übertragungsweg 10 des Farbsignales unabhängig ist von der Gestalt und der Amplitude der in der Flankendetektionsanordnung 24 detektierten Signaldifferenzsignale, so daß auch die Farbkante weitgehend jitterfrei ist, wie im Diagramm (b) der Figur 4 schematisch dargestellt ist. Dort sind einige Bildzeilen zl bis z5 mit einem Farbsprung zwischen einer ersten Farbart F1 und einer zweiten Farbart F2 schematisch dargestellt.

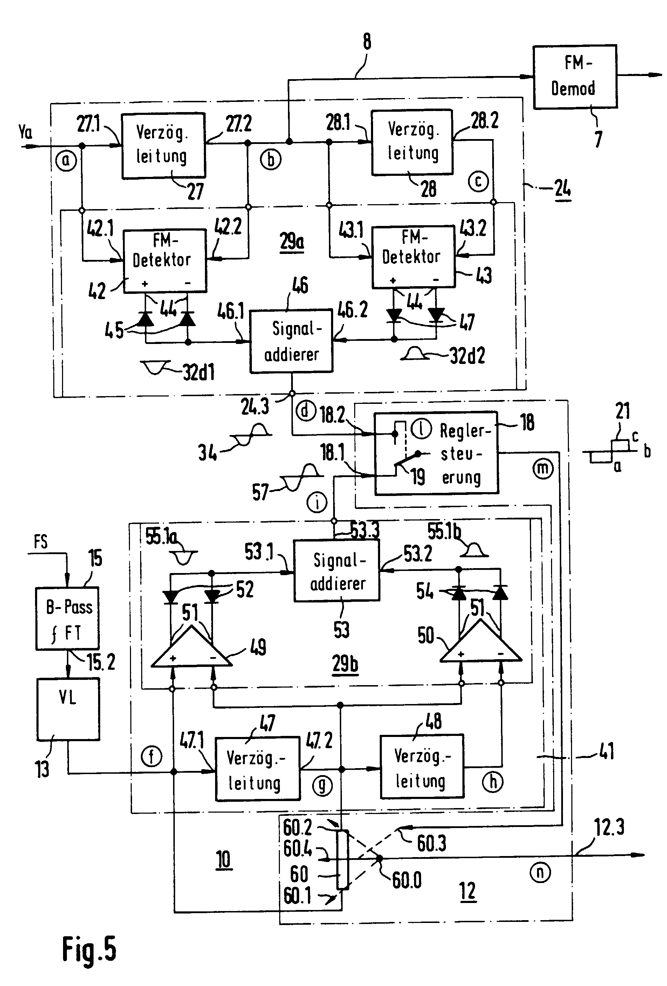

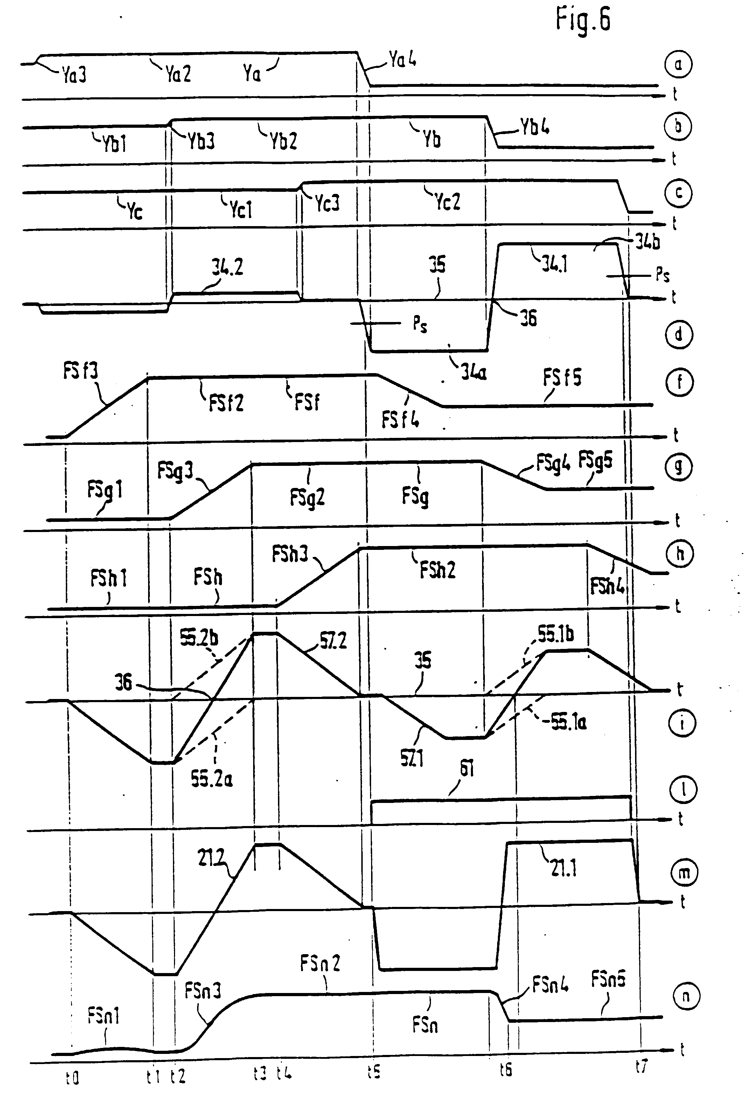

Das in Figur 5 dargestellte Ausführungsbeispiel einer Anordnung zur Übertragung von Farbfernsehsignalen und zur Beseitigung eines störenden Farbsaumes entlang einer insbesondere senkrechten Farbkante enthält im Unterschied zu dem in Figur 2 dargestellten Ausführungsbeispiel neben einer Flankendetektionsanordnung 24 zur Detektion von Signalflanken im Leuchtdichtesignal des Farbfernsehsignales zusätzlich eine Farbsignalflankendetektionsanordnung 41. Außerdem ist die erste Verzögerungsleitung 27 der Flankendetektionsanordnung 24 zur Detektion von Leuchtdichteflanken gleichzeitig die Verzögerungsleitung im Übertragungsweg 8. Ein Ausschnitt des unverzögerten Leuchtdichtesignales Ya ist im Diagramm (a) der Figur 6, ein dementsprechender Ausschnitt des durch die Verzögerungsleitung 27 verzögerten Leuchtdichtesignales Yb ist im Diagramm (b) und ein dementsprechender Ausschnitt des in der zweiten Verzögerungsleitung 28 der Flankendetektoranordnung 24 verzögerten Leuchtdichtesignales Yc ist im Diagramm (c) der Figur 6 schematisch dargestellt. Das Leuchtdichtesignal Ya ist auch im dargestellten Ausführungsbeispiel ein FM-Signal. Als Signaldifferenzgeber dienen FM-Demodulatoren 42 und 43 mit einem nicht invertierten und einem invertierten Signalausgang 44. Die entgegengesetzt gepolten Signalausgänge 44 des ersten FM-Demodulators 42, dessen beide Signaleingänge 42.1 und 42.2 an den Eingang 27.1 und den Ausgang 27.2 der ersten Verzögerungsleitung 27 der Flankendetektoranordnung 24 geschaltet sind, sind über Gleichrichter 45 einer bestimmten einheitlichen Polungsrichtung an den Signaleingang 46.1 eines Signaladdierers 46 und die entgegengesetzt gepolten Signalausgänge 44 des zweiten FM-Demodulators 43, dessen Signaleingänge 43.1 und 43.2 mit dem Eingang 28.1 und dem Ausgang 28.2 der zweiten Verzögerungsleitung 28 der Flankendetektoranordnung 24 verbunden sind, sind über Gleichrichter 47, deren Polungsrichtung gegenüber der Polungsrichter der ausgangsseitigen Gleichrichter 45 des ersten FM-Demodulators 42 entgegengesetzt gerichtet ist, an den zweiten Signaleingang 46.2 des Signaladdierers 46 angeschlossen. Mit Hilfe dieser Maßnahmen werden den Signaleingängen 46.1 und 46.2 des Signaladdierers 46 Differenzsignale 32dl und 32d2 entgegengesetzter Polungsrichtung zugeführt, so daß die Signaladdition innerhalb des Signaladdierers 46 einer Subtraktion der von den FM-Demodulatoren 42 und 43 gelieferten Differenzsignalen entspricht. Der Signalausgang des Signaladdierers 46, der gleichzeitig der Detektionsausgang 24.3 der Flankendetektionsanordnung 24 ist, liefert ein durch die Signaladdition erzeugtes Flankendifferenzsignal 34.1 bzw. 34.2, das jeweils im Diagramm (d) der Figur 6 schematisch dargestellt ist und das im dargestellten Ausführungsbeispiel mit einem Nulldurchgang 36 um eine Nullinie 35 des Flankendifferenzsignales schwingt und dessen erste Schwingung 34a vor dem Nulldurchgang im dargestellten Ausführungsbeispiel stets negativ ist und dessen zweite Schwingung 34b zeitlich nach dem Nulldurchgang im dargestellten Ausführungsbeispiel stets positiv ist. Die Farbsignalflankendetektionsanordnung 41 enthält ebenfalls die Serienschaltung einer ersten Verzögerungsleitung 47 und einer zweiten Verzögerungsleitung 48, von denen die erste Verzögerungsleitung 47 gleichzeitig zur Verzögerung des Farbsignales FSf im Übertragungsweg 10 des Farbsignales angeordnet ist. Die Verzögerungszeit Tv47 der ersten Verzögerungsleitung 47 der Farbsignalflankendetektionsanordnung 41 ist im dargestellten Ausführungsbeispiel ein ungeradzahliges ganzes Vielfaches der halben Schwingungsdauer T(FT) des Farbträgers, so daß die Farbträgerschwingungen am Ausgang 47.2 und am Eingang 47.1 der ersten Verzögerungsleitung 47 zueinander phasengleich sind. Das Diagramm (f) der Figur 6 enthält einen dem Ausschnitt des im Diagramm (a) dargestellten Leuchtdichtesignales Ya entsprechenden Ausschnitt des unverzögerten Farbsignales FSf am Ausgang des Bandpasses 15, das Diagramm (g) den um die Verzögerungszeit Tv47 der ersten Verzögerungsleitung 47 zeitlich versetzten, im Diagramm (f) dargestellten Signalausschnitt und das Diagramm (h) den durch die Verzögerungszeit der zweiten Verzögerungsleitung 48 nochmals zeitlich versetzten Ausschnitt des in Diagramm (f) dargestellten Signalausschnittes des Farbsignales FSf. Die Verzögerungszeit Tv47 der ersten Verzögerungsleitung 47 ist außerdem so bemessen, daß sie geringfügig größer ist als die größte zu erwartenden Anstiegszeit T(FS3) einer Signalflanke des Farbsignales FSf. Als Signaldifferenzgeber der Farbsignalflankendetektionsanordnung 41 dienen im dargestellten Ausführungsbeispiel Differenzverstärker 49 und 50 mit einem nicht invertierten und einem invertierten Signalausgang 51. Die entgegengesetzt gepolten Signalausgänge des ersten Differenzverstärkers 49 sind über Gleichrichter 52 einer bestimmten gleichen Polungsrichtung an den ersten Signaleingang 53.1 eines Signaladdierers 53 und die entgegengesetzt gepolten Signalausgänge 51 des zweiten Differenzverstärkers 50 sind über zu den ersten Gleichrichtern entgegengesetzt gepolte Gleichrichter 54 mit dem zweiten Signaleingang 53.2 des Signaladdierers verbunden. Die Differenzverstärker 49 und 50 liefern wiederum in Verbindung mit ihren ausgangsseitigen Gleichrichtern 52 und 54 Paare von Differenzfarbsignalen 55.1a und 55.1b, die im Diagramm (i) der Figur 6 dargestellt sind und von denen ebenfalls das erste Differenzfarbsignal 55.1a eine negative Polungsrichtung und das zweite Differenzfarbsignal 56.1b eine positive Polungsrichtung aufweist. Der Signaladdierer 53 bildet durch Addition dieser beiden Signale das zugehörige um eine Nullinie 35 schwingende und diese in einem Nulldurchgang 36 durchlaufenden Farbflankendifferenzsignal 57.1, wie im Diagramm (i) dargestellt ist.

Als Stelleinrichtung enthält der Signalumschalter 12 in dem in Figur 5 dargestellten Ausführungsbeispiel ein elektronisches Überblendpotentiometer 60, dessen Abgriff 60.0 mit dem Signalausgang 12.3 des Signalumschalters verbunden ist und dessen Signaleingänge 60.1 und 60.2 die Enden des abgreifbaren Widerstandes des elektronischen Überblendpotentiometers 60 mit dem Eingang 47.1 und dem Ausgang 47.2 der ersten Verzögerungsleitung 47 der Farbsignalflankendetektionsanordnung 41 verbinden. Außerdem enthält der Signalschalter 12 eine Reglersteuerung 18 mit einem Vorrangschalter 19, der den ersten Eingang 18.1 der Reglersteuerung 18 solange mit dem Signalausgang 53.3 des Signaladdierers 53 der Farbsignalflankendetektionsanordnung 41 verbindet, solange ein Flankendifferenzsignal 34.2 einen bestimmten Schaltpegel Ps, der im Diagramm (d) angegeben ist, nicht erreicht und überschreitet. Im anderen Fall ist der zweite Eingang 18.2 der Reglersteuerung 18 während der Dauer des Flankendifferenzsignales 34.1 der Flankendetektoranordnung 24 für die Detektion von Leuchtdichtesignalflanken mit dessen Detektionsausgang 24.3 verbunden.

Bei dem in Figur 6 dargestellten Signalverlauf eines Farbfernsehsignales werden zwei Farbkanten übertragen. Bei der ersten Farbkante ist ein großer Farbsignalsprung FSf3 mit einem kleinen Leuchtdichtesprung SYa3 verbunden. Dadurch wird in der Flankendetektionsanordnung 24 an den Leuchtdichtesignalflanken Ya3, Yb3 und Yc3 ein Flankendifferenzsignal 34.2 erzeugt, dessen Signalpegel wesentlich unterhalb dem Schaltpegel Ps für den Vorrangschalter 19 bleibt, so daß der Vorrangschalter in der Reglersteuerung 18 nicht umgeschaltet wird. Dadurch gelangt das in der Farbsignalflankendetektionsanordnung 41 erzeugte Flankendifferenzsignal 57.2 als Stellsignal 21.2 an den Stelleingang 60.3 des elektronischen Überblendpotentiometers 60, wie im Diagramm (m) dargestellt ist. Der Abgreifer 60.4 des elektronischen Überblendpotentiometers wird dadurch zunächst aus der Mittenstellung zum zweiten Signaleingang 60.2 des elektronischen Potentiometers verstellt, dem das im Diagramm (g) dargestellte, durch die erste Verzögerungsleitung 47 verzögerte Farbsignal zugeführt ist eingestellt, wodurch der erste, eine erste Farbart F1 darstellende Signalzustand FSg1 in etwa erhalten bleibt, und anschließend während der Anstiegsdauer der Signalflanke FSg3 des verzögerten Farbsignales FSg in die andere, mit dem ersten Signaleingang 60.1 verbundene Entstellung des elektronischen Potentiometers 60 eingestellt. Bei diesem Verstellgang zwischen dem Zeitpunkt t2 und dem Zeitpunkt t3 erreicht das im Diagramm (n) dargestellte Farbsignal FSn in einem verhältnismäßig schnellem Anstieg FSn3 den eine zweite Farbart F2 darstellenden Signalzustand FSn2, wegen des überwiegend zunehmenden Anteils dieses Signalzustandes.

Die zweite Leuchtdichtesignalflanke Ya4 des unverzögerten Leuchtdichtesignales Ya an der zweiten Farbkante ist so beschaffen, daß das in der Flankendetektionsanordnung 24 erzeugte Flankendetektionssignal 34.1 zur Detektion dieser Leuchtdichteflanke Ya4 den Schaltpegel Ps in der Reglersteuerung 18 überschreitet und den Vorrangschalter 19 der Reglersteuerung an den Detektionsausgang 24.3 der Flankendetektionsanordnung 24 für die Detektion einer Leuchtdichteflanke für die Dauer des Flankendifferenzsignales am Detektionsausgang 24.3 umschaltet, wie im Diagramm (1) durch das Vorrangssignal 61 dargestellt ist. Dadurch kommt vom Zeitpunkt t5 bis zum Zeitpunkt t7 das Flankendifferenzsignal 34.1 der Flankendetektoranordnung 24 als Stellsignal 22.1 für das elektronische Überblendpotentiometer 60 zur Wirkung. Dementsprechend wird der Abgriff 60.4 des Potentiometers zunächst in die mit dem zweiten Signaleingang 60.2 für das verzögerte Farbsignal FSg verbundene Endstellung und zum Zeitpunkt des Nulldurchganges 36 des Flankendifferenzsignales 34.1 mit der Geschwindigkeit des Nulldurchganges von der genannten Endstellung in die andere, mit dem ersten Signaleingang 60.1 verbundene Endstellung verstellt, der das unverzögerte Farbsignal FSf zugeführt ist. Dadurch entsteht am Signalausgang 12.3 des Signalumschalters 12 eine sehr steile Signalflanke FSn4 zwischen dem die zweite Farbart F2 darstellenden Signalzustand FSn2 und dem die dritte Farbart F3 darstellenden dritten Signalzustand FSn5 des am Signalausgang 12.3 des Signalumschalters 12 ausgegebenen Farbsignales FSn, wie im Diagramm (n) schematisch dargestellt ist. Solange keine der Flankendetektoranordnungen 24 oder 41 ein Flankendifferenzsignal an ihrem Detektionsausgang erzeugt, ist das elektronische Überblendpotentiometer 60 in eine Mitteneinstellung eingestellt, in der etwa gleiche Anteile des unverzögerten Farbsignales FSf und des verzögerten Farbsignales FSg überlagert an den Ausgang des Übertragungsweges 10 für das Farbsignal gelangen. Durch diese Überlagerung wird das Flächenrauschen in der Farbbilddarstellung gemindert, ohne daß die Farbbilddarstellung als solche verfälscht wird. Bei Farbänderungen wird das elektronische Überblendpotentiometer 60 gleitend und nicht schlagartig verstellt, so daß hierdurch keine Schaltstörungen auftreten.

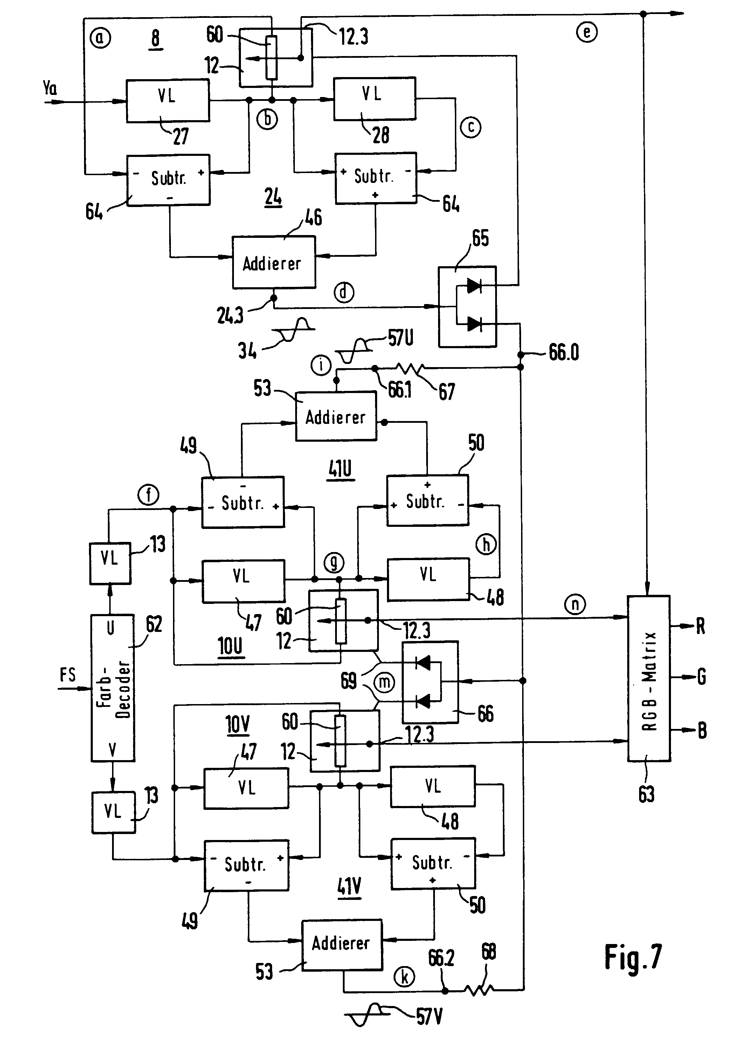

Das in Figur 7 dargestellte Ausführungsbeispiel einer Anordnung zur Übertragung von Farbfernsehsignalen und zur Beseitigung störender Farbsäume an senkrechten Farbkanten enthält einen Übertragungsweg 8 zur Übertragung eines Leuchtdichtesignales Ya eines Farbfernsehsignales und zwei gleichartige Übertragungswege 10U und 10V zur Übertragung eines Farbsignales U und eines Farbsignales V. Im dargestellten Ausführungsbeispiel sind es die Übertragungswege der Farbsignale U und V zwischen einem Farbdecoder 62 und einer RGB-Matrix 63 eines Farbfernsehempfängers. Außerdem wird der RGB-Matrix ein flankenverbessertes Leuchtdichtesignal Ye zugeführt. Alle drei Übertragungswege 8, 10U und 10V enthalten je einen Signalumschalter 12, dessen Schalteinrichtung ein elektronisches Überblendpotentiometer 60 ist, entsprechend dem in Figur 5 dargestellten Ausführungsbeispiel. Die Signalumschalter werden vom Ausgangssignal einer an den Übertragungsweg 8 zur Übertragung des Leuchtdichtesignales angeschlossenen Flankendetektionsanordnung gesteuert. Diese Flankendetektionsanordnung 24 enthält entsprechend den zuvor dargestellten Ausführungsbeispielen zwei in Serie geschaltete Verzögerungsleitungen 27 und 28, von denen die erste Verzögerungsleitung 27 gleichzeitig die Verzögerungsleitung des Übertragungsweges 8 der Leuchtdichtesignale ist. Längs den Verzögerungsleitungen 27 und 28 sind diesen entsprechend den zuvor dargestellten Ausführungsbeispielen die Eingangsseite von Subtrahierern 64 angeschlossen, die aus den Ein- und Ausgangssignalen der zugeordneten Verzögerungsleitung je ein Signaldifferenzsignal jeweils entgegengesetzter Polungsrichtung bilden und einem Addierer 46 zur Erzeugung eines Flankendifferenzsignales zuführen. Dieses Flankendifferenzsignal 34 wird den Signalumschaltern 12 über Entkopplungsschaltung 65 und 66 als Stellsignal unmittelbar zugeführt.

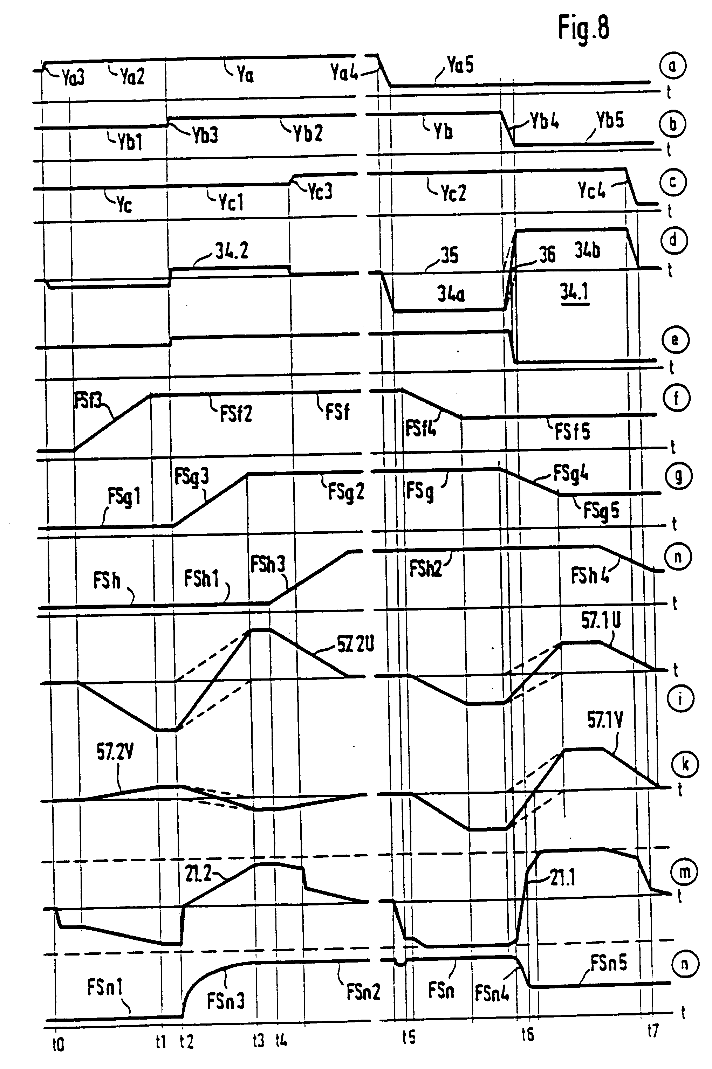

In den in Figur 8 dargestellten Signaldiagrammen (a) bis (n) der im Ausführungsbeispiel gemäß Figur 7 erzeugten Signale zeigen die in den Diagrammen (a) bis (c) dargestellten Leuchtdichtesignale den gleichen Verlauf wie in den Diagrammen (a) bis (c) der Figur 6, so daß sich auch die Diagramme (d) der beiden Figuren 6 und 8 mit dem darin dargestellten, aus dem unverzögerten und den verzögerten Leuchtdichtesignalen Ya, Yb und Yc gebildeten Flankendifferenzsignal 34 entsprechen. Ebenso entsprechen sich die in den gleichnamig dargestellten Diagrammen (f) bis (i) dargestellten Signale, nämlich das unverzögerte Farbsignal FSf, die beiden verzögerten Farbsignale FSh und FSg sowie das daraus gebildete Flankendifferenzsignal 57, so daß nicht mehr näher auf diese Signale eingegangen zu werden braucht.

Unter der Wirkung des am Ausgang 24.3 der an den Übertragungsweg 8 des Leuchtdichtesignals angeschlossenen Flankendetektionsanordnung 24 gebildeten Flankendetektionssignales 34 als Stellsignal erzeugt der Signalumschalter 12 im übertragungsweg 8 aus dem unverzögerten Leuchtdichtesignal Ya und dem verzögerten Leuchtdichtesignal Yb an seinem Signalausgang 12.3 ein Leuchtdichtesignal Ye, dessen Verlauf im Diagramm (e) der Figur 8 dargestellt ist, und das an den Leuchtdichteflanken gegenüber den Signalflanken des im Diagramm (b) dargestellten verzögerten Leuchtdichtesignales Yb durch die Schaltgeschwindigkeit des Signalumschalters 12 im Übertragungsweg der Leuchtdichtesignale wesentlich versteilert ist. Damit wird eine wesentlich schärfere Bildwiedergabe erreicht.

In dem in Fig. 7 dargestellten Ausführungsbeispiel enthalten beide Übertragungswege der Farbsignale U und V eine Flankendetektionsanordnung 41U bzw. 41V, die beide beispielsweise der Detektionsanordnung des in Figur 5 dargestellten Ausführungsbeispiels entsprechen und deshalb mit den gleichen Bezugszeichen bezeichnet sind.

Im Diagramm (k) der Figur 8 ist der Kurvenzug der Flankendifferenzsignale 57.2V und 57.1V für die Farbsignalflanken an den entsprechenden Leuchtdichtekanten Yb3 und Yb4 des verzögerten Leuchtdichtesignales Yb für den Übertragungsweg des zweiten Farbsignales V dargestellt. Die in den Diagrammen (i) und (k) dargestellten Flankendetektionssignale 57U und 57V werden mit einer bestimmten durch die Widerstände 67 und 68 eingestellten Abschwächung dem im Diagramm (d) dargestellten Flankendifferenzsignal am Ausgang der Entkopplungsschaltung 65 überlagert. Die Entkopplungsschaltung 66 bildet zusammen mit den Widerständen 67 und 68 eine Kombinationsschaltung, in der die Überlagerung bewirkt wird und an deren Signalausgängen 69 aus dieser Überlagerung ein im Diagramm (m) dargestelltes Stellsignal 21 zur Einstellung der elektronischen Überblendpotentiometer 60 in den Übertragungswegen 10U und 10V der beiden Farbsignale U und V erzeugt wird. Das durch die Verstellung des elektronischen Überblendpotentiometers 60 im Übertragungsweg 10U des ersten Farbsignales U gebildete Farbsignal FSu ist im Diagramm (n) schematisch dargestellt. Durch das Vermeiden eines Vorrangschalters in der Kombinationsschaltung 66 bis 68 wird jeglicher Schaltvorgang im Stellkreis für die Signalumschalter und damit Störungen in der Übertragung der Leuchtdichte- und Farbsignale durch derartige Schaltvorgänge vermieden.

## Patentansprüche

1. Anordnung zur Übertragung von Farbfernsehsignalen, die ein Leuchtdichtesigal (Ya) und wenigstens ein diesem zugeordnetes Farbsignal (FSf) enthalten,
- mit einer Verzögerungsleitung (9, 27) im Übertragungsweg (8) für das Leuchtdichtesignal
- mit jeweils einer Farbsignal-Verzögerungsleitung (11, 47) im Übertragungsweg (10, 10U, 10V) jedes Farbsignals (FSf), die je ein verzögertes Farbsignal (FSg) bereitstellt
- mit einem Signalumschalter (12) im Übertragungsweg (10) jedes Farbsignales (FSf), der abhängig von einem Stellsignal (21) entweder in einer ersten Schaltstellung (12a) das verzögerte Farbsignals (FSg) oder in einer zweiten Schaltstellung (12c) das unverzögerte Farbsignal (FSf) zum Signalausgang (12.3) des Signalschalters überträgt
- und mit einer Flankendetektoranordnung (24), die Leuchtdichtesprünge (SYa3) im Leuchtdichtesignal (Ya) zwischen einem ersten Leuchtdichtewert und einem zweiten Leuchtdichtewert erkennt, um beim Erkennen eines Leuchtdichtesprungs den Signalumschalter (12) an einem Detektionszeitpunkt (t2) umzuschalten,
**dadurch gekennzeichnet,**
daß die Flankendetektoranordnung (24) enthält:
- eine Serienschaltung einer ersten und einer zweiten Verzögerungsleitung (27, 28), die eingangsseitig an den Übertragungsweg (8) des Leuchtdichtesignals angeschlossen ist, um ein einfach verzögertes Leuchtdichtesignal (Yb) und ein nochmals verzögertes Leuchtdichtesignal (Yc) bereitzustellen, wobei die Verzögerungszeit (Tv27) wenigstens der ersten Verzögerungsleitung (27) größer ist als die größte zu erwartende Flankendauer (T(SF)) einer störenden Farbsignalflanke (FSf3),
- einen ersten Signaldifferenzgeber (30dl, 42, 64), der aus dem unverzögerten Leuchtdichtesignal (Ya) und dem einfach verzögerten Leuchtdichtesignal (Yb) ein erstes Differenzsignal (32dl) bildet
- einen zweiten Signaldifferenzgeber (30 dl, 43, 64), der aus dem einfach verzögerten Leuchtdichtesignal (Yb) und dem nochmals verzögerten Leuchtdichtesignal (Yc) ein zweites Differenzsignal (32d2) bildet
- und eine Summationsstufe (31, 46), die zum ersten Differenzsignal (32dl) das zweite Differenzsignal (32d2) mit einer derartigen Polarität hinzufügt, daß beim Vorliegen eines Leuchtdichtesprungs (SYb3) im einfach verzögerten Leuchtdichtesignal (Yb) ein um eine Nullinie (35) schwingendes Flankendifferenzsignal (34) entsteht, das einerseits mit einen Nulldurchgang (36) einen Detektionszeitpunkt (t2) markiert, der zeitlich in der Mitte der Signalflanke (Yb3) jedes Leuchtdichtesprungs (SYb3) im einfach verzögerten Leuchtdichtesignal (Yb) liegt, und das andererseits am Beginn des Leuchtdichtesprungs den Signalumschalter (12) zum verzögerten Farbsignal (FSg) und nach dem Nulldurchgang zum unverzögerten Farbsignal (FSf) umschaltet
und daß der Signalumschalter (12) eine dritte Schaltstellung (12b) enthält, bei der der Signalausgang (12.3) über ohmsche Widerstände (16) sowohl mit dem unverzögerten Farbsignal (FSf) als auch mit dem verzögerten Farbsignal (FSg) verbundenen ist und auf die der Signalumschalter dann eingestellt ist, wenn die Amplitude des Flankendifferenzsignals (34) nahe Null ist.

2. Anordnung nach Anspruch 1 zur Übertragung von Farbfernsehsignalen, die mehrere einem Leuchtdichtesignal (Ya) zugeordnete, je auf einem Farbsignal-Übertragungsweg (10U, 10V) übertragene Farbsignale (U, V) enthalten,
**dadurch gekennzeichnet,**
- daß in jedem Farbsignal-Übertragungsweg (10U, 10V) eine Farbsignal-Verzögerungsleitung (47) und ein zwischen dem Eingang und dem Ausgang dieser Verzögerungsleitung liegender Signalumschalter (12) angeordnet ist
- und daß die Signalumschalter (12) aller Farbsignal-Übertragungswege (10U, 10V) gleichzeitig vom Flankendifferenzsignal (34) gesteuert werden.

3. Anordnung nach Anspruch 1,
**dadurch gekennzeichnet,**
daß bei der Übertragung eines auf eine Farbträgerschwingung (FT) aufmodulierten Farbsignales (FSf) die Verzögerungszeit (Tvll) der Farbsignal-Verzögerungsleitung (11) exakt ein ganzes Vielfaches der Schwingungsdauer (T(FT)) oder ein ungeradzahliges ganzes Vielfaches einer halben Schwingungsdauer der Farbträgerschwingung ist und daß im Falle des ungeradzahligen ganzen Vielfachen der halben Schwingungsdauer ein Inverter (14) in Serie geschaltet ist.

4. Anordnung nach Anspruch 1,
**dadurch gekennzeichnet,**
daß die im Übertragungsweg (8) des Leuchtdichtesignals (Ya) angeordnete Verzögerungsleitung die erste Verzögerungsleitung (27) der Serienschaltung ist.

5. Anordnung nach Anspruch 1,
**gekennzeichnet durch**
den Signaldifferenzgebern (30dl, 30d2) vorgeschaltete Signalwandler (32) jeweils zum Demodulieren des unverzögerten, des einfach verzögerten und des nochmals verzögerten Leuchtdichtesignals (Ya, Yb, Yc).

6. Anordnung nach Anspruch 5,
**dadurch gekennzeichnet,**
daß die Signalwandlerschaltungen (32) Hüllkurvendemodulatoren sind.

7. Anordnung nach Anspruch 1,
**dadurch gekennzeichnet,**
- daß die Signaldifferenzgeber (30d1, 30d2) FM-Demodulatoren (42, 43) mit einem nicht invertierenden Ausgang und einem invertierenden Ausgang sind
- und daß an den Ausgängen (44) des einen FM-Demodulators (42) Gleichrichter (45) in der einen Polungsrichtung und an den Ausgängen (44) des anderen FM-Demodulators (43) Gleichrichter (47) in der anderen Polungsrichtung angeschlossen sind, die ausgangsseitig jeweils an den Signaleingängen (46.1, 46.2) eines Signaladdierers (46) angeschlossen sind und mit diesem die Summationsstufe bilden.

8. Anordnung nach Anspruch 1,
**gekennzeichnet**
- durch eine zusätzliche, an den Übertragungsweg (10) des Farbsignals (FSf) angeschlossene Farbkantendetektionsanordnung (41) zur Erzeugung eines, um eine Nullinie (35) schwingenden Farbflankendifferenzsignals (57.1)
- und durch eine Reglersteuerung (18) zur Erzeugung eines gemeinsamen Steuer- oder Stellsignales (21) für den Signalumschalter (12) aus dem Flankendifferenzsignal (34) und aus dem Farbflankendifferenzsignal (57).

9. Anordnung nach Anspruch 8,
**dadurch gekennzeichnet,**
daß die Farbflankendetektoranordnung (41) enthält:
- eine Serienschaltung einer ersten und einer zweiten Farbsignal-Verzögerungsleitung (47, 48), die eingangsseitig an den Übertragungsweg (10, 10U, 10V) des Farbsignals (FSf) angeschlossen ist, um ein einfach verzögertes Farbsignal (FSg) und ein nochmals verzögertes Farbsignal (FSh) bereitzustellen, wobei die Verzögerungszeit (Tv47) wenigstens der ersten Verzögerungsleitung (47) größer ist als die größte zu erwartende Flankendauer (T(SF3)) einer störenden Farbsignalflanke (FSf3),
- einen ersten Farbsignaldifferenzgeber (49), der aus dem unverzögerten Farbsignal (FSf) und dem einfach verzögerten Farbsignal (FSg) ein erstes Differenzfarbsignal (55.la) bildet
- einen zweiten Farbsignaldifferenzgeber (50), der aus dem einfach verzögerten Farbsignal (Yb) und dem nochmals verzögerten Farbsignal(Yc) ein zweites Differenzfarbsignal (55.lb) bildet
- und einen Signaladdierer (53), die zum ersten Differenzfarbsignal (55.la) das zweite Differenzfarbsignal (55.la) derart hinzufügt, daß beim Vorliegen eines Farbsignalsprungs (FSg3) im einfach verzögerten Farbsignal (Fsg) ein um eine Nullinie (35) schwingendes Farbflankendifferenzsignal (57) entsteht, das einerseits mit einen Nulldurchgang (36) einen Detektionszeitpunkt markiert, der zeitlich in der Mitte der Signalflanke (FSg3) jedes Farbsprungs im einfach verzögerten Farbsignal (FSg) liegt.

10. Anordnung nach Anspruch 9,
**dadurch gekennzeichnet,**
daß die im Übertragungsweg (10) des Farbsignals (FSf) angeordnete Verzögerungsleitung die erste Farbsignal-Verzögerungsleitung (47) der zwei in Serie geschalteten Farbsignal-Verzögerungsleitungen (47, 48) ist.

11. Anordnung nach Anspruch 8,
**dadurch gekennzeichnet,**
daß die Reglersteuerung (18) eine Vorranganordnung (19) enthält und daß bei Vorhandensein eines eine Signalflanke (Yb3) des verzögerten Leuchtdichtesignals (Yb) anzeigenden Flankendifferenzsignales (34) am Eingang (18.2) für dieses Signal den Eingang (18.1) für das Farbflankendifferenzsignal (57) gesperrt ist.

12. Anordnung nach Anspruch 8,
**dadurch gekennzeichnet,**
daß in einer Kombinationsschaltung (66 bis 68) zum Anpassen des Flankendifferenzsignales (34) und des Farbflanken differenzsignales (57) an die Signalumschalter (12), die Farbflankendifferenzsignale (57U, 57V) mit einer in der Kombinationsschaltung eingestellten Abschwächung (67, 68) dem Flankendifferenzsignal (34) überlagert sind.

13. Anordnung nach Anspruch 1,
**gekennzeichnet durch**
einen im Übertragungsweg (8) des Leuchtdichtesignals (Ya) angeordneten zusätzlichen Signalumschalter (12), der durch des Flankendifferenzsignal (34) in wenigstens drei Schaltstellungen steuerbar ist, so daß, während der vor dem Nulldurchgang (36) des Flankendifferenzsignals (34) liegenden Schwingung (34a) zum Signalausgang (12.3) des zusätzlichen Signalumschalters (12) das einfach verzögerte Leuchtdichtesignales übertragen wird, während der nach dem Nulldurchgang des Flankendifferenzsignales liegenden Schwingung (34b) zum Signalausgang (12.3) des zusätzlichen Signalumschalters das unverzögerte Leuchtdichtesignals übertragen wird, und wenn kein Flankendifferenzsignal vorhanden ist, der Signalausgang des zusätzlichen Signalumschalters über ohmsche Widerstände (16) mit dem Ausgang und dem Eingang der Verzögerungsleitung im Übertragungsweg des Leuchtdichtesignales verbunden ist.

14. Anordnung nach Anspruch 13,
**dadurch gekennzeichnet,**
daß die Umschalteinrichtung der Signalumschalter (12) in den Übertragungswegen (8, 10) jeweils ein elektronisches Überblendpotentiometer (60) ist,
- dessen erster Signaleingang (60.1) mit dem Eingang und dessen zweiter Signaleingang (60.2) mit dem Eingang der in dem Übertragungsweg (8,10) angeordneten Verzögerungsleitung (27,47) verbunden ist,
- das in eine Mittenstellung (60.4) zwischen den beiden Endeinstellungen (60.1, 60.2) eingestellt ist, wenn das Stellsignal nahe oder gleich Null ist.

15. Anordnung nach Anspruch 1,
**dadurch gekennzeichnet,**
- daß die Signaldifferenzgeber (30d1, 30d2, 49, 50) Differenzverstärker mit einem nicht invertierten Ausgang und einem invertierten Ausgang sind
- und daß an den Ausgängen (51) des einen Differenzverstärkers (49) gleichrichter (52) in der einen Polungsrichtung und an den Ausgängen (51) des anderen Differenzverstärkers (50) Gleichrichter (54) in der anderen Polungsrichtung angeschlossen sind, die ausgangsseitig jeweils an die Signaleingänge (53.1, 53.2) eines Signaladdierers (53) angeschlossen sind und mit diesem die Summationsstufe bilden.

16. Anordnung nach Anspruch 1,
**gekennzeichnet durch**
eine zusätzliche Verzögerungsleitung (13) im Übertragungsweg (10) des Farbsignales (FSf) mit einer derart bemessenen Verzögerungszeit (Tv13), daß der Beginn einer Signalflanke (Yb3) des verzögerten Leuchtdichtesignales (Yb) unmittelbar um den Beginn des zugehörigen Flankensignals (FSg3) des verzögerten Farbsignales (FSg) gelegen ist.

## Claims

1. Arrangement for transmitting colour television signals which contain a luminance signal (Ya) and at least one colour signal allocated to this luminance signal,
- having a delay line (9, 27) in the transmission path (8) for the luminance signal,
- having a respective colour signal delay line (11, 47) in the transmission path (10, 10U, 10V) of each colour signal (FSf), each of which provides a delayed colour signal (FSg),
- having a signal changeover switch (12) in the transmission path (10) of each colour signal (FSf), which, depending on an actuating signal (21), either in a first switch position (12a) transfers the delayed colour signal (FSg) or in a second switch position (12c) transfers the non-delayed colour signal (FSf) to the signal output (12.3) of the signal switch,
- and having an edge detector arrangement (24) which, in order to change over the signal switch (12) at a detection instant (t2) when a luminance step-change is detected, detects luminance step-changes (SYa3) in the luminance signal (Ya) between a first luminance value and a second luminance value,
**characterised in that**
the edge detector arrangement (24) contains:
- a series circuit comprising a first and a second delay line (27, 28) that is connected to the input side of the transmission path (8) of the luminance signal in order to provide a luminance signal (Yb) having a single delay and a luminance signal (Yc) having a further delay, the delay time (Tv27) of at least the first delay line (27) being greater than the maximum expected edge interval (T(SF)) of a disturbing colour signal edge (FSf3),
- a first signal difference generator (30dl, 42, 64) which generates a first difference signal (32dl) from the non-delayed luminance signal (Ya) and the luminance signal (Yb) having a single delay,
- a second signal difference generator (30d1, 43, 64) which generates a second difference signal (32d2) from the luminance signal (Yb) having a single delay and the luminance signal (Yc) having a further delay,
- and a summation stage (31, 46) which adds the second difference signal (32d2) to the first difference signal (32dl), with such polarity that when a luminance step-change (SYb3) is present in the luminance signal (Yb) having a single delay, an edge difference signal (34) oscillating about a zero line (35) is produced, which on the one hand marks a detection instant (t2) at a zero crossing (36) which lies chronologically in the centre of the signal edge (Yb3) of each luminance step-change (SYb3) in the luminance signal (Yb) having a single delay, and which on the other hand switches the signal changeover switch (12) to the delayed colour signal (FSg) at the start of the luminance step-change, and to the non-delayed colour signal (FSf) at the zero crossing,
and that the signal changeover switch (12) includes a third switch position (12b) in which the signal output (12.3) is connected via ohmic resistances (16) to both the non-delayed colour signal (FSf) and the delayed colour signal (FSg) and to which position the signal changeover switch is set when the amplitude of the edge difference signal (34) is approximately zero.

2. Arrangement according to Claim 1, for transmitting colour television signals which contain several colour signals (U, V) allocated to a luminance signal (Ya), and each being transmitted on a colour signal transmission path (10U, 10V),
**characterised in that**
- a colour signal delay line (47) is arranged in each colour signal transmission path (10U, 10V) and a signal changeover switch (12) is arranged between the input and the output of this delay line,
- and the signal changeover switches (12) of all colour signal transmission paths (10U, 10V) are controlled simultaneously by the edge difference signal (34).

3. Arrangement according to Claim 1, **characterised in that** during the transmission of colour signal (FSf) modulated onto a colour carrier (FT), the delay time (Tvll) of the delay line (11) is exactly one whole multiple of the period of oscillation (T(FT)) or one odd-numbered whole multiple of half the oscillation period of the colour carrier, and that an inverter (14) is connected in series in the case of the odd-numbered whole multiple of the half the oscillation period.

4. Arrangement according to Claim 1, **characterised in that** the delay line arranged in the transmission path (8) of the luminance signal (Ya) is the first delay line (27) of the series circuit.

5. Arrangement according to Claim 1, **characterised by** signal converters (32) connected upstream of the signal difference generators (30d1, 30d2), each to demodulate the non-delayed luminance signal, the luminance signal having a single delay and the luminance signal having a further delay (Ya, Yb, Yc).

6. Arrangement according to Claim 5, **characterised in that** the signal converter circuits (32) are envelope modulators.

7. Arrangement according to Claim 1, characterised in that
- the signal difference generators (30d1, 30d2) are FM demodulators (42, 43) having a non-inverting output and an inverting output,
- and rectifiers (45) are connected with one polarity to the outputs (44) of one FM demodulator (42) and with the other polarity to the outputs (44) of the other FM demodulator (43), the outputs of said rectifiers being connected to the signal inputs (46.1, 46.2) of a signal adder (46) and together with this form the summation stage.

8. Arrangement according to Claim 1, **characterised by**
- an additional colour edge detector arrangement (41) connected to the transmission path (10) of the colour signal (FSf), for generating a colour edge difference signal (57.1),
- and a controller (18) for generating a common control or actuating signal (21) for the signal changeover switch (12) from the edge difference signal (34) and the colour edge difference signal (57).

9. Arrangement according to Claim 8, **characterised in that** the colour edge detector arrangement (41) contains:
- a series circuit of a first and a second colour signal delay line (47, 48) which is connected to the input side of the transmission path (10, 10U, 10V) of the colour signal (FSf), in order to provide a colour signal (FSg) having a single delay and a colour signal (FSh) having a further delay, the delay time (Tv47) of at least the first delay line (47) being greater than the maximum expected edge interval (T(SF3)) of a disturbing colour signal edge (FSf3),
- a first colour difference signal generator (49) which generates a first colour difference signal (55.1a) from the non-delayed colour signal (FSf) and the colour signal (FSg) having a single delay,
- a second colour difference signal generator (50) which generates a second colour difference signal (55.1b) from the colour signal (Yb) having a single delay and the colour signal (Yc) having a further delay,
- and a signal adder (53) which adds the second colour difference signal (55.1b) to the first colour difference signal (55.1a), so that when a colour signal step-change (FSg3) is present in the colour signal (FSg) having a single delay, an edge difference signal (57) oscillating about a zero line (35) is produced, which marks a detection instant at a zero crossing (36) which lies chronologically in the centre of the signal edge (FSg3) of each colour step-change in the colour signal (FSg) having a single delay.

10. Arrangement according to Claim 9, **characterised in that** the delay line arranged in the transmission path (10) of the colour signal (FSf) is the first colour signal delay line (47) of the two colour signal delay lines (47, 48).

11. Arrangement according to Claim 8, **characterised in that** the controller (18) contains a priority arrangement (19), and that in the presence of an edge difference signal (34) at the input (18.2) for this signal, indicating a signal edge (Yb3) of the delayed luminance signal (Yb), the input (17) is blocked for the colour edge difference signal (57).

12. Arrangement according to Claim 8, **characterised in that** for matching the edge difference signal (34) and the colour edge difference signal (57) at the signal changeover switch (12), the colour edge difference signals (57U, 57V) are superimposed on the edge difference signal (34) in a combinatorial circuit (66 to 68) by means of an attenuator (67, 68) adjusted in the combinatorial circuit.

13. Arrangement according to Claim 1, **characterised by** an additional signal changeover switch (12) arranged in the transmission path (8) of the luminance signal (Ya), which can be controlled in at least three switch positions by the edge difference signal (34), so that the luminance signal having a single delay is transmitted to the signal output (12.3) of the additional signal changeover switch (12) during the oscillation (34a) which appears prior to the crossing (36) of the edge difference signal (34) and the non-delayed luminance signal is transmitted to the signal output (12.3) of the additional signal changeover switch during the oscillation (34b) which appears after the zero crossing of the edge difference signal, and if no edge difference signal is present, the signal output of the additional signal changeover switch is connected via ohmic resistances (16) to the output and the input of the delay line in the transmission path of the luminance signal.

14. Arrangement according to Claim 13, **characterised in that** the changeover device of the signal changeover switch (12) in the transmission path (8, 10) is in each case an electronic cross-fading potentiometer (60),
- whose first signal input (60.1) is connected to the input and whose second signal input (60.2) is connected to the input of the delay line (27, 42) arranged in the transmission path (8, 10),
- which is set to a mid-position (60.4) between the two end positions (60.1, 60.2) if the actuating signal is approximately or equal to zero.

15. Arrangement according to Claim 1, **characterised in that**
- the signal difference generators (30d1, 30d2, 49, 50) are differential amplifiers with a non-inverting output and an inverting output,
- and rectifiers (52) are connected with one polarity to the outputs (51) of the one differential amplifier (49) and rectifiers (54) with the other polarity are connected to the outputs (51) of the other differential amplifier (50), the outputs of the rectifiers being connected in each case to the signal inputs (53.1, 53.2) of a signal adder (53), and together with the latter form the summation stage.

16. Arrangement according to Claim 1, **characterised by** an additional delay line (13) in the transmission path (10) of the colour signal (FSf), having a delay time (Tv13) designed so that the start of a signal edge (Yb3) of the delayed luminance signal (Yb) is positioned directly at the start of the associated edge signal (FSg3) of the delayed colour signal (FSg).

## Revendications

1. Dispositif pour la transmission de signaux de télévision en couleurs qui contiennent un signal de luminance (Ya) et au moins un signal de chrominance (FSf) associé à celui-ci,
- comportant une ligne de retard (9, 27) dans la voie de transmission (8) du signal de luminance,
- comportant chaque fois une ligne de retard de signal de chrominance (11, 47) dans la voie de transmission (10, 10U, 10V) de chaque signal de chrominance (FSf), laquelle ligne de retard fournit chaque fois un signal de chrominance retardé (FSg),
- comportant un commutateur de signal (12) dans la voie de transmission (10) de chaque signal de chrominance (FSf) qui, en fonction d'un signal de réglage (21), transmet à sa sortie de signal (12.3), soit dans une première position de commutation (12a), le signal de chrominance retardé (FSg) soit dans une deuxième position de commutation (12c), le signal de chrominance non retardé (FSf),
- et comportant un agencement détecteur de flanc (24) qui détecte des sauts de luminance (SYa3) dans le signal de luminance (Ya) entre une première valeur de luminance et une deuxième valeur de luminance pour commuter le commutateur de signal (12) à un moment de détection (t2) en cas de détection d'un saut de luminance,
**caractérisé** en ce
que l'agencement détecteur de flanc (24) comprend :
- un circuit en série d'une première et d'une deuxième lignes de retard (27, 28) qui est raccordé, côté entrée, à la voie de transmission (8) du signal de luminance pour fournir un signal de luminance retardé une seule fois (Yb) et un signal de luminance retardé une nouvelle fois (Yc), le retard (Tv27) au moins de la première ligne de retard (27) étant supérieur à la plus grande durée escomptée (T(SF)) d'un flanc de signal de chrominance parasite (FSf3),
- un premier transmetteur de différence de signaux (30dl, 42, 64) qui fournit un premier signal de différence (32dl) à partir du signal de luminance non retardé (Ya) et du signal de luminance retardé une seule fois (Yb),
- un deuxième transmetteur de différence de signaux (30dl, 43, 64) qui fournit un deuxième signal de différence (32d2) à partir du signal de luminance retardé une seule fois (Yb) et du signal de luminance retardé une nouvelle fois (Yc),
- et un étage d'addition (31, 46) qui ajoute au premier signal de différence (32dl) le deuxième signal de différence (32d2) avec une polarité telle qu'en présence d'un saut de luminance (SYb3) dans le signal de luminance retardé une seule fois (Yb), il apparaît un signal de différence de flancs (34) qui oscille autour d'une ligne zéro (35) et qui, d'une part marque, avec un passage par zéro (36), un moment de détection (t2) qui se situe dans le temps au milieu du flanc de signal (Yb3) de chaque saut de luminance (SYb3) dans le signal de luminance retardé une seule fois (Yb), et qui d'autre part, commute le commutateur de signal (12) au début du saut de luminance, sur le signal de chrominance retardé (FSg) et après le passage par zéro, sur le signal de chrominance non retardé (FSf),
et que le commutateur de signal (12) comporte une troisième position de commutation (12b) dans laquelle la sortie de signal (12.3) est reliée, par l'intermédiaire de résistances ohmiques (16), aussi bien au signal de chrominance non retardé (FSf) qu'au signal de chrominance retardé (FSg) et sur laquelle le commutateur de signal est réglé lorsque l'amplitude du signal de différence de flancs (34) est proche de zéro.

2. Dispositif selon la revendication 1 pour la transmission de signaux de télévision en couleurs qui contiennent plusieurs signaux de chrominance (U, V) associés à un signal de luminance (Ya) et transmis chacun sur une voie de transmission de signal de chrominance (10U, 10V),
**caractérisé** en ce
qu'une ligne de retard de signal de chrominance (47) et un commutateur de signal (12) situé entre l'entrée et la sortie de cette ligne de retard sont disposés dans chaque voie de transmission de signal de chrominance (10U, 10V)
- et que les commutateurs de signal (12) de toutes les voies de transmission de signal de chrominance (10U, 10V) sont commandés en même temps par le signal de différence de flancs (34).

3. Dispositif selon la revendication 1,
**caractérisé** en ce
que lors de la transmission d'un signal de chrominance (FSf) modulé sur une oscillation porteuse de chrominance (FT), le retard (Tv11) de la ligne de retard de signal de chrominance (11) est exactement un multiple entier de la durée d'oscillation (T(FT)) ou un multiple entier impair d'une demi-durée de l'oscillation porteuse de chrominance et que dans le cas du multiple entier impair de la demi-durée d'oscillation, un inverseur (14) est monté en série.

4. Dispositif selon la revendication 1,
**caractérisé** en ce
que la ligne de retard disposée dans la voie de transmission (8) du signal de luminance (Ya) est la première ligne de retard (27) du circuit en série.

5. Dispositif selon la revendication 1,
**caractérisé** par
des convertisseurs de signaux (32) montés en amont des transmetteurs de différence de signaux (30d1, 30d2) et destinés chacun à démoduler le signal de luminance non retardé (Ya), le signal de luminance retardé une seule fois (Yb) et le signal de luminance retardé une nouvelle fois (Yc).

6. Dispositif selon la revendication 5,
**caractérisé** en ce
que les circuits convertisseurs de signaux (32) sont des démodulateurs d'enveloppe.

7. Dispositif selon la revendication 1,
**caractérisé** en ce
- que les transmetteurs de différence de signaux (30dl, 30d2) sont des démodulateurs FM(42, 43) avec une sortie non inverseuse et une sortie inverseuse
- et qu'il est raccordé aux sorties (44) de l'un (42) des démodulateurs FM., des redresseurs (45) dans l'un des sens de polarité et aux sorties (44) de l'autre démodulateur FM. (43), dès redresseurs (47) dans l'autre sens de polarité qui, côté sortie, sont chacun raccordés aux entrées de signal (46.1, 46.2) d'un additionneur de signaux (46) et forment avec celui-ci l'étage d'addition.

8. Dispositif selon la revendication 1,
**caractérisé**
- par un dispositif supplémentaire de détection de bords de couleurs (41) raccordé à la voie de transmission (10) du signal de chrominance (FSf) et destiné à produire un signal de différence de bords de couleurs (57.1) oscillant autour d'une ligne zéro (35),
- et par une commande de réglage (18) destinée à produire un signal commun de commande ou de réglage (21) pour le commutateur de signal (12) à partir du signal de différence de flancs (34) et du signal de différence de bords de couleurs (57).

9. Dispositif selon la revendication 8,
**caractérisé** en ce
que le dispositif de détection de bords de couleurs (41) comprend :
- un circuit en série d'une première et d'une deuxième lignes de retard de signal de chrominance (47, 48) qui est raccordé, côté entrée, à la voie de transmission (10, 10U, 10V) du signal de chrominance (FSf) pour fournir un signal de chrominance retardé une seule fois (FSg) et un signal de chrominance retardé une nouvelle fois (FSh), le retard (Tv47) au moins de la première ligne de retard (47) étant supérieur à la plus grande durée escomptée (T(SF3)) d'un flanc de signal de chrominance parasite (FSf3),
- un premier transmetteur de différence de signaux de chrominance (49) qui fournit un premier signal de chrominance de différence (55.la) à partir du signal de chrominance non retardé (FSf) et du signal de chrominance retardé une seule fois (FSg),
- un deuxième transmetteur de différence de signaux de chrominance (50) qui fournit un deuxième signal de chrominance de différence (55.1b) à partir du signal de chrominance retardé une seule fois (Yb) et du signal de chrominance retardé une nouvelle fois (Yc),
- et un additionneur de signaux (53) qui ajoute au premier signal de chrominance de différence (55.1a) le deuxième signal de chrominance de différence (55.1b) de telle manière qu'en présence d'un saut (FSg3) dans le signal de chrominance retardé une seule fois (FSg), il apparaît un signal de différence de bords de couleurs (57) qui oscille autour d'une ligne zéro (35) et qui, d'une part marque, avec un passage par zéro (36), un moment de détection qui se situe dans le temps au milieu du flanc de signal (FSg3) de chaque saut de chrominance (SYb3) dans le signal de chrominance retardé une seule fois (FSg).

10. Dispositif selon la revendication 9.
**caractérisé** en ce
que la ligne de retard disposée dans la voie de transmission (10) du signal de chrominance (FSf) est la première (47) ligne de retard de signal de chrominance des deux lignes de retard de signal de chrominance (47, 48) montées en série.

11. Dispositif selon la revendication 8,
**caractérisé** en ce
que la commande de réglage (18) comprend un dispositif de priorité (19) et qu'en présence d'un signal de différence de flancs (34) indiquant un flanc (Yb3) du signal de luminance retardé (Yb) à l'entrée (18.2) pour ce signal, l'entrée (18.2) pour le signal de différence de bords de couleurs (57) est bloquée.

12. Dispositif selon la revendication 8,
**caractérisé** en ce
que dans un circuit combinatoire (66 à 68) destiné à adapter le signal de différence de flancs (34) et le signal de différence de bords de couleurs (57) au commutateur de signal (12), des signaux de différence de bords de couleurs (57U, 57V) sont superposés au signal de différence de flancs (34) avec un affaiblissement (67, 68) réglé dans le circuit combinatoire.

13. Dispositif selon la revendication 1,
**caractérisé** par
un commutateur de signal (12) supplémentaire disposé dans la voie de transmission (8) du signal de luminance (Ya), lequel commutateur de signal peut être commandé par le signal de différence de flancs (34) dans au moins trois positions de commutation de sorte que pendant l'oscillation (34a) située avant le passage par zéro (36) du signal de différence de flancs (34), le signal de luminance retardé une seule fois est transmis à la sortie de signal (12.3) du commutateur de signal (12) supplémentaire,
pendant l'oscillation (34b) située après le passage par zéro du signal de différence de flancs, le signal de luminance non retardé est transmis à la sortie de signal (12.3) du commutateur de signal supplémentaire,
et en l'absence d'un signal de différence de flancs, la sortie de signal du commutateur de signal supplémentaire est reliée par l'intermédiaire de résistances ohmiques (16) à la sortie et à l'entrée de la ligne de retard dans la voie de transmission du signal de luminance.

14. Dispositif selon la revendication 13,
**caractérisé** en ce
que le dispositif de commutation du commutateur de signal (12) dans la voie de transmission (8, 10) est chaque fois un potentiomètre électronique graduel (60)
- dont la première entrée de signal (60.1) est reliée à l'entrée et dont la deuxième entrée de signal (60.2) est reliée à l'entrée de la ligne de retard (27, 47) disposée dans la voie de transmission (8, 10),
- qui est réglé dans une position centrale (60.4) entre les deux positions extrêmes (60.1, 60.2) lorsque le signal de réglage est proche de zéro ou égal à zéro.

15. Dispositif selon la revendication 1,
**caractérisé** en ce
que les transmetteurs de différence de signaux (30d1, 30d2, 49, 50) sont des amplificateurs différenciateurs avec une sortie non inverseuse et une sortie inverseuse,
- et qu'il est raccordé aux sorties (51) de l'un (49) des amplificateurs différenciateurs des redresseurs (52) dans l'un des sens de polarité et aux sorties (51) de l'autre amplificateur différenciateur (50) des redresseurs (54) dans l'autre sens de polarité qui, côté sortie, sont raccordés chacun aux entrées de signal (53.1, 53.2) d'un additionneur de signaux (53) et forment avec celui-ci l'étage d'addition.

16. Dispositif selon la revendication 1,
**caractérisé** par
une ligne de retard (13) supplémentaire dans la voie de transmission (10) du signal de chrominance (FSf) avec un retard (Tv13) calculé de telle manière que le début d'un flanc (Yb3) du signal de luminance retardé (Yb) est situé directement autour du début du flanc (FSg3) correspondant du signal de chrominance retardé (FSg).
